(19) Europäisches Patentamt
European Patent Office
Office européen des brevets

(11) **EP 3 742 732 A1**

(12) **EUROPEAN PATENT APPLICATION**
published in accordance with Art. 153(4) EPC

(43) Date of publication:
**25.11.2020 Bulletin 2020/48**

(21) Application number: **19741876.7**

(22) Date of filing: **16.01.2019**

(51) Int Cl.:
**H04N 19/50** (2014.01)        **H04N 9/07** (2006.01)
**H04N 19/503** (2014.01)        **H04N 19/593** (2014.01)

(86) International application number:
**PCT/JP2019/001083**

(87) International publication number:
**WO 2019/142821 (25.07.2019 Gazette 2019/30)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **16.01.2018   JP 2018005211**

(71) Applicant: **NIKON CORPORATION**
**Minato-ku**
**Tokyo 108-6290 (JP)**

(72) Inventor: **ANDO, Ichiro**
**Tokyo 108-6290 (JP)**

(74) Representative: **Hoffmann Eitle**
**Patent- und Rechtsanwälte PartmbB**
**Arabellastraße 30**
**81925 München (DE)**

(54) **ENCODER, DECODER, ENCODING METHOD, DECODING METHOD, ENCODING PROGRAM, AND DECODING PROGRAM**

(57)    An encoder includes a generation unit configured to generate first image data constituted of a pixel group of a first color component and second image data constituted of a pixel group of a second color component differing from the first color component, from RAW image data in which the first color component and the second color component are arranged in a repeating fashion; and an encoding unit configured to encode the second image data generated by the generation unit on the basis of the first image data generated by wherein the generation unit.

FIG.4

## Description

CLAIM OF PRIORITY

The present application claims priority from Japanese patent application JP 2018-005211 filed on January 16, 2018, the content of which is hereby incorporated by reference into this application.

BACKGROUND

The present invention relates to an encoder, a decoder, an encoding method, a decoding method, an encoding program, and a decoding program.

There are techniques for compressing an image to each color component (see, for example JP 2002-125241 A). However, in this conventional technique, correlation between component frames is not used.

SUMMARY

An aspect of the disclosure of an encoder in this application is an encoder, comprising: a generation unit configured to generate first image data constituted of a pixel group of a first color component and second image data constituted of a pixel group of a second color component differing from the first color component, from RAW image data in which the first color component and the second color component are arranged in a repeating fashion; and an encoding unit configured to encode the second image data generated by the generation unit on the basis of the first image data generated by wherein the generation unit.

Another aspect of the disclosure of an encoder in this application is an encoder, comprising: a generation unit configured to generate first image data constituted of a first color component and second image data constituted a second color component differing from the first color component from RAW image data based on output from an image capture element in which a photoelectric conversion unit is configured to perform photoelectric conversion of light of the first color component and a photoelectric conversion unit is configured to perform photoelectric conversion of light of the second color component are arranged in a repeating fashion; and an encoding unit configured to encode the second image data generated by the generation unit on the basis of the first image data generated by wherein the generation unit.

An aspect of the disclosure of a decoder in this application is a decoder, comprising: an acquisition unit configured to acquire first encoded image data in which first image data constituted of a pixel group of a first color component is encoded, and second encoded image data in which second image data constituted of a pixel group of a second color component differing from the first color component is encoded on the basis of the first image data; a decoding unit configured to decode the first encoded image data acquired by the acquisition unit to the first image data and decode the second encoded image data acquired by the acquisition unit to the second image data on the basis of the first image data; and a generation unit configured to generate RAW image data in which the first color component and the second color component are arranged in a repeating fashion, on the basis of the first image data and the second image data decoded by the decoding unit.

An aspect of the disclosure of an encoding method in this application is an encoding method, comprising: a generation unit configured to generate first image data constituted of a first color component and second image data constituted a second color component differing from the first color component from RAW image data based on output from an image capture element in which a photoelectric conversion unit is configured to perform photoelectric conversion of light of the first color component and a photoelectric conversion unit is configured to perform photoelectric conversion of light of the second color component are arranged in a repeating fashion; and an encoding unit configured to encode the second image data generated by the generation unit on the basis of the first image data generated by wherein the generation unit.

An aspect of the disclosure of a decoding method in this application is a decoding method, comprising: an acquisition unit configured to acquire first encoded image data in which first image data constituted of a pixel group of a first color component is encoded, and second encoded image data in which second image data constituted of a pixel group of a second color component differing from the first color component is encoded on the basis of the first image data; a decoding unit configured to decode the first encoded image data acquired by the acquisition unit to the first image data and decode the second encoded image data acquired by the acquisition unit to the second image data on the basis of the first image data; and a generation unit configured to generate RAW image data in which the first color component and the second color component are arranged in a repeating fashion, on the basis of the first image data and the second image data decoded by the decoding unit.

BRIEF DESCRIPTION OF THE DRAWINGS

FIG. 1 is a descriptive drawing showing an encoding and decoding example of Embodiment 1.
FIG. 2 is a descriptive drawing showing an example of the color array shown in FIG. 1.
FIG. 3 is a block diagram showing a hardware configuration example of the information processing apparatus.
FIG. 4 is a block diagram showing a mechanical configuration example of the encoder according to Embodiment 1.

FIG. 5 is a descriptive drawing showing a generation example for component frames by the first generation unit.

FIG. 6 is a block diagram showing a configuration example of the encoding unit.

FIG. 7 is a descriptive drawing showing a reference direction example for component frames.

FIG. 8 is a descriptive view showing a detection example for a motion vector.

FIG. 9 is a descriptive view showing an example 1 of pixel position compensation prediction between component frames.

FIG. 10 is a descriptive view showing an example 2 of pixel position compensation prediction between component frames.

FIG. 11 is a descriptive view showing an example 3 of pixel position compensation prediction between component frames

FIG. 12 is a descriptive view showing an example 4 of pixel position compensation prediction between component frames.

FIG. 13 is a descriptive view showing an example 5 of pixel position compensation prediction between component frames.

FIG. 14 is a descriptive view showing an example 6 of pixel position compensation prediction between component frames.

FIG. 15 is a descriptive view showing an example 7 of pixel position compensation prediction between component frames.

FIG. 16 is a descriptive view showing an example 4 of pixel position compensation prediction between component frames.

FIG. 17 is a descriptive drawing showing a data structure example for an encoded component frame.

FIG. 18 is a flowchart showing an example of encoding process steps by the encoder.

FIG. 19 is a block diagram showing a mechanical configuration example of the decoder.

FIG. 20 is a block diagram showing a configuration example of the decoding unit.

FIG. 21 is a flowchart showing an example of decoding process steps by the decoder.

FIG. 22 is a descriptive drawing showing an encoding and decoding example of Embodiment 2.

FIG. 23 is a block diagram showing a mechanical configuration example of the encoder according to Embodiment 2.

FIG. 24 is a flowchart showing an example of encoding process steps by the encoder according to Embodiment 2.

FIG. 25 is a block diagram showing a mechanical configuration example of the decoder according to Embodiment 2.

FIG. 26 is a flowchart showing an example of decoding process steps by the decoder according to Embodiment 2.

FIG. 27 is a descriptive drawing showing an encoding and decoding example of Embodiment 3.

FIG. 28 is a descriptive drawing showing a reference direction example for component frames.

FIG. 29 is a descriptive drawing showing an example of encoding at the slice level.

FIG. 30 is a descriptive drawing showing an encoding and decoding example of Embodiment 4.

DETAILED DESCRIPTION OF THE EMBODIMENT

Embodiments will be explained below determined with reference to the attached drawings. The image data to be encoded in the embodiments is RAW image data. RAW image data is, for example, image data prior to being subjected to a process of undergoing photoelectric conversion in an image capture element equipped with color filters in a Bayer arrangement and then being outputted, and is subjected to color interpolation and compression (in the case of a still image, JPEG (Joint Photographic Experts Group) format, and in the case of a video, MPEG (Moving Picture Experts Group) format). However, the RAW image data may have undergone white balance adjustment.

[Embodiment 1]

<Encoding and Decoding Example>

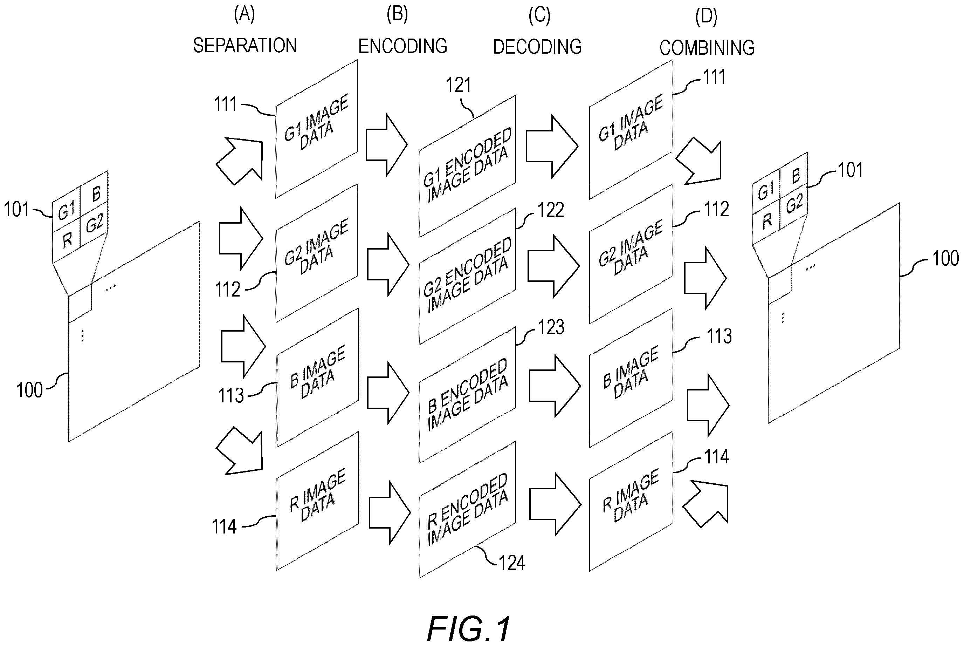

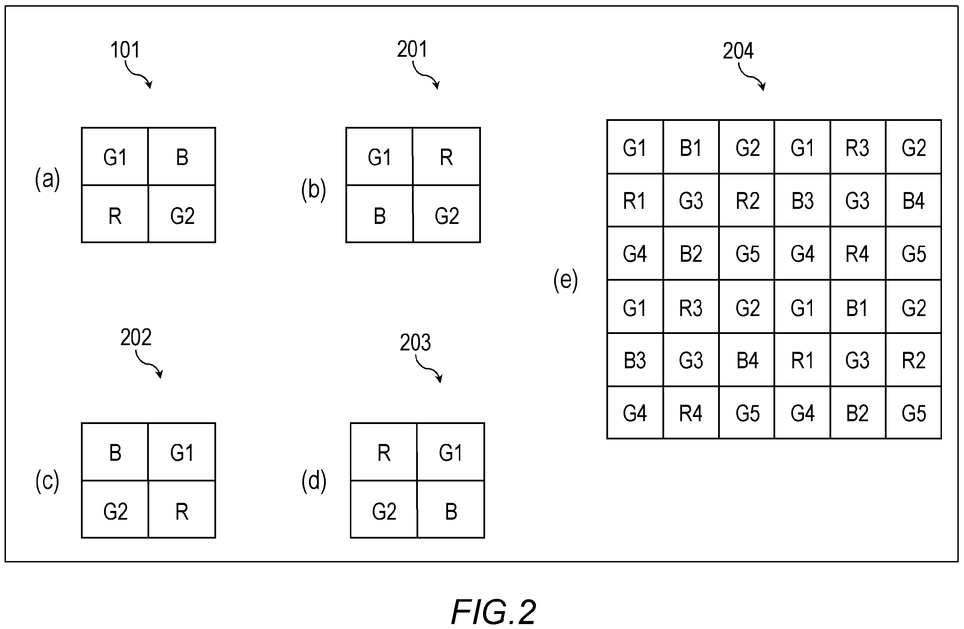

FIG. 1 is a descriptive drawing showing an encoding and decoding example of Embodiment 1. (A) Separation and (B) encoding are executed by the encoder, and (C) decoding and (D) combining are executed by the decoder. The RAW image data 100 is image data in which a color array 101 having a plurality of color components is arranged periodically. In the case of a Bayer arrangement, for example, the color array 101 includes, in an arrangement of $2\times2$ pixels, color components arranged such that green (G1) is in the upper left, blue (B) is in the upper right, red (R) is in the lower left, and green (G2) is in the lower right. Other examples of the color array 101 will be described later with reference to FIG. 2.

(A) The encoder generates a component frame for each color component from the RAW image data 100. Specifically, for example, the encoder generates G1 image data 111 that is a color component frame for green (G1), G2 image data 112 that is a color component frame for green (G2), B image data 113 that is a color component frame for blue (B), and R image data 114 that is a color component frame for red (R).

The G1 image data 111 is image data constituted of a G1 pixel group from the color arrays 101 in the RAW image data 100. The G2 image data 112 is image data constituted of a G2 pixel group from the color arrays 101 in the RAW image data 100. The B image data 113 is image data constituted of a B pixel group from the color arrays 101 in the RAW image data 100. The R image data 114 is image data constituted of an R pixel group from the color arrays 101 in the RAW image data 100.

(B) The encoder encodes the color component frames between the component frames. Specifically, for example, the encoder encodes one component frame group by in-frame prediction encoding to generate an I-picture, and encodes the remaining component frame groups by inter-frame prediction encoding to a P-picture or a B-picture. Here, the G1 image data 111 is encoded to G1 encoded image data 121, the G2 image data 112 is encoded to G2 encoded image data 122, the B image data 113 is encoded to B encoded image data 123, and the R image data 114 is encoded to R encoded image data 124.

(C) The decoder decodes the encoded component frame group. Specifically, for example, the decoder decodes the I-picture, and then, sequentially decodes the following P-picture or B-picture to generate another component frame. In other words, the decoder decodes the G1 encoded image data 121, the G2 encoded image data 122, the B encoded image data 123, and the R encoded image data 124, to generate the G1 image data 111, the G2 image data 112, the B image data 113, and the R image data 114.

(D) The decoder combines the component frames in the decoded component frame group to generate the RAW image data 100. Specifically, for example, pixels G1, G2, B, and R in the same position in the G1 image data 111, the G2 image data 112, the B image data 113, and the R image data 114 are arranged according to the color array 101 to decode the RAW image data 100.

Thus, by performing inter-component-frame prediction of the RAW image data 100 by relying on the property that the hue and the chroma result in a higher degree of correlation among component frames, it is possible to improve encoding efficiency for the RAW image data 100. Also, it is possible to restore the original RAW image data 100 even if encoding is performed by inter-component-frame prediction encoding.

FIG. 2 is a descriptive drawing showing an example of the color array shown in FIG. 1. (a) indicates the same color array as the color array 101 shown in FIG. 1. (b) shows a color array 201 in which the B pixel and the R pixel are interchanged in position as compared to (a). (c) shows a color array 202 in which a pixel array (G1, R) in the left half and a pixel array (B, G2) in the right half of (a) are interchanged in position. (d) shows a color array 203 in which a pixel array (G1, B) in the left half and a pixel array (R, G2) in the right half of (b) are interchanged in position. (e) shows an example of a color array 204 of 6×6 pixels. The color array 204 of (e) includes green pixels in any pixel array including a vertical pixel array (6 pixels), a horizontal pixel array (6 pixels) and a diagonal pixel array (3 or more pixels). Below, the color array 101 of (a) is used as an example of the color array.

<Hardware Configuration Example of Information Processing Apparatus>

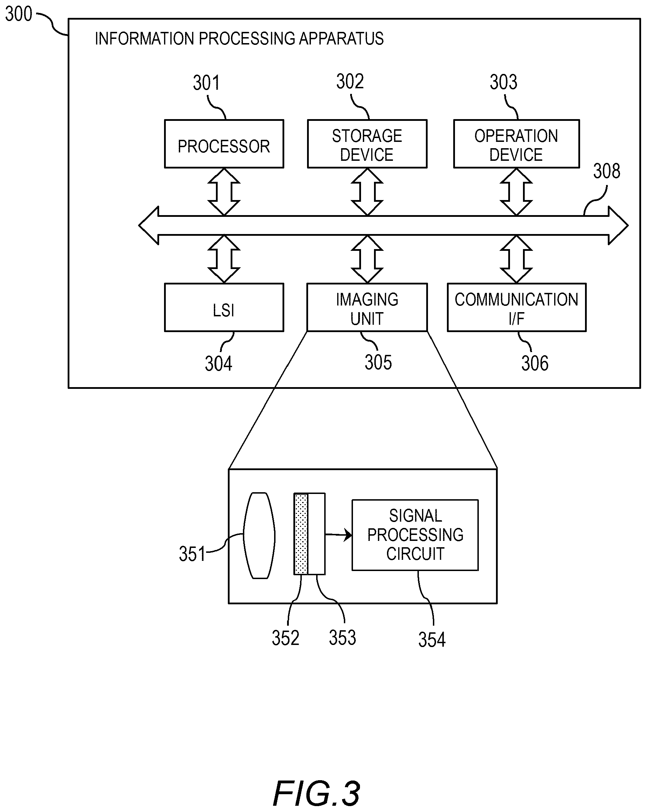

FIG. 3 is a block diagram showing a hardware configuration example of the information processing apparatus. An information processing apparatus 300 is an apparatus including an encoder and/or a decoder. The information processing apparatus 300 may be an imaging apparatus such as a digital camera or a digital video camera, or a personal computer, a tablet, a smartphone, or a gaming device, for example.

The information processing apparatus 300 includes a processor 3 01, a storage device 302, an operation device 303, an LSI (Large Scale In tegration) 304, an imaging unit 305, and a communication interface (com munication IF) 306. These are connected to one another by a bus 308. The processor 301 controls the information processing apparatus 300. The storage device 302 serves as a work area of the processor 301.

The storage device 302 is a non-transitory or temporary recording medium which stores the various programs and data. The storage devic e 302 can be, for example, a read-only memory (ROM), a random access memory (RAM), a hard disk drive (HDD), or a flash memory. The operati on device 303 operates data. The operation device 303 can be, for exam ple, a button, a switch, or a touch panel.

An LSI 304 is an integrated circuit that executes specific processes including image processes such as color interpolation, contour enhancement, and gamma correction; an encoding process; a decoding process; a compression/decompression process; and the like.

An imaging unit 305 captures a subject and generates RAW image data. The imaging unit 305 has an imaging optical system 351, an image capture element 353 having a color filter 352, and a signal processing circuit 354.

The imaging optical system 351 is constituted of a plurality of lenses including a zoom lens and a focus lens, for example. For a simplified view, in FIG. 3, one lens is depicted for the imaging optical system 351.

The image capture element 353 is a device for capturing an image of a subject using light beams passing through the imaging optical system 351. The image capture element 353 may be a sequential scanning type solid-state image sensor (such as a CCD (charge-coupled device) image sensor), or may be an X-Y addressing type solid-state image capture element (such as a CMOS (complementary metal-oxide semiconductor) image sensor).

On the light-receiving surface of the image capture element 353, a pixel group having photoelectric conversion units is arranged in a matrix. For each pixel of the image capture element 353, a plurality of types of color filters 352 that respectively allow through light of differing color components are arranged in a predetermined color array. Thus, each pixel of the image capture element 353 outputs an electrical signal corresponding to each color component as a result of color separation by the color filter 352.

In Embodiment 1, for example, red (R), green (G), and blue (B) color filters 152 are arranged periodically on the light-receiving surface according to a Bayer arrangement of two rows by two columns. As an example, odd-numbered rows of the color array of the image capture element 353 have G and B pixels arranged alternately, whereas even-numbered rows of the color array have R and G pixels arranged alternately. The color array overall has green pixels arranged so as to form a checkered pattern. As a result, the image capture element 353 can acquire RAW image data in color during imaging.

The signal processing circuit 354 sequentially executes, on an image signal inputted from the image capture element 353, an analog signal process (correlated double sampling, black level correction, etc.), an A/D conversion process, and digital signal processing (defective pixel correction). The RAW image data 100 outputted from the signal processing circuit 354 is inputted to the LSI 304 or a storage device 302. A communication I/F 306 connects to an external device via the network and transmits/receives data.

<Mechanical Configuration Example of Encoder>

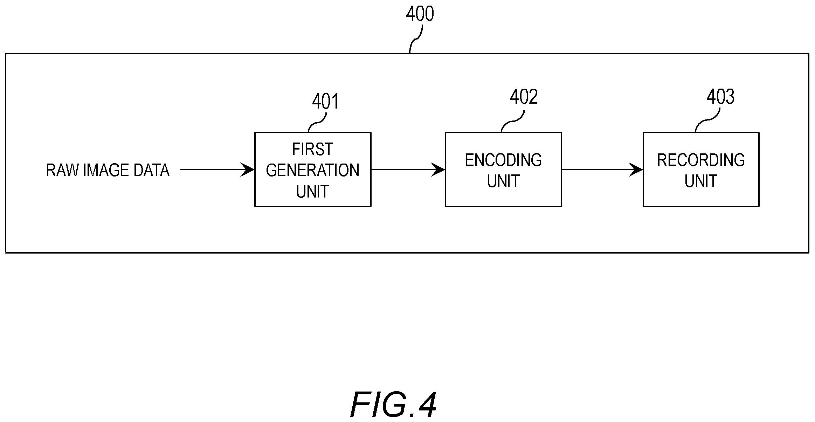

FIG. 4 is a block diagram showing a mechanical configuration example of the encoder according to Embodiment 1. The encoder 400 has a first generation unit 401, an encoding unit 402, and a recording unit 403. The first generation unit 401 generates a component frame for each color component from the RAW image data 100, the encoding unit 402 encodes the component frames, and the recording unit 403 records the encoded component frames in the storage device 302.

The first generation unit 401, the encoding unit 402, and the recording unit 403 are specifically functions realized by the LSI 304, or by the processor 301 executing programs stored in the storage device 302, for example.

The first generation unit 401 generates first image data constituted of a pixel group of a first color component and second image data constituted of a pixel group of a second color component differing from the first color component from RAW image data in which the first color component and the second color component are arranged in a repeating fashion. In other words, the first generation unit 401 generates the first image data constituted of the first color component and the second image data constituted of the second color component differing from the first color component from RAW image data based on the output from an image capture element 353 in which pixels having a photoelectric conversion unit that performs photoelectric conversion of light of the first color component and pixels having a photoelectric conversion unit that performs photoelectric conversion of the second color component are arranged in a repeating fashion.. The RAW image data 100 may be image data directly outputted from the image capture element 353, or may be a duplicated RAW image data 100, for example.

As described above, the color array 101 has four color components of three types: green (G1), green (G2), blue (B), and red (R).

Here, the first color component is any one of the green (G1), green (G2), blue (B), and red (R) constituting the color array 101. The second color component is blue (B) or red (R) if the first color component is green (G1) or green (G2); any one of green (G1), green (G2), and red (R) if the first color component is blue (B); and any one of green (G1), green (G2), and blue (B) if the first color component is red (R).

The first image data is the G1 image data 111 if the first color component is green (G1), the G2 image data 112 if the first color component is green (G2), the B image data 113 if the first color component is blue (B), and the R image data 114 if the first color component is red (R).

By contrast, the second image data is the B image data 113 or the R image data 114 if the first image data is the G1 image data 111 or the G2 image data 112; any one of the G1 image data 111, the G2 image data 112, and the R image data 114 if the first image data is the B image data 113; and any one of the G1 image data 111, the G2 image data 112, and the B image data 113 if the first image data is the R image data 114.

Also, the RAW image data 100 has a third color component that is the same as either the first color component or the second color component, or differs from both the first color component and the second color component. Specifically, for example, if the first color component is green (G1) and the second color component is blue (B), then the third color component is the green (G2), which is the same color component as the green (G1) of the first color component, or is red (R), which is a color component differing from the first color component and the second color component. Also, if the first color component is green (G2) and the second color component is blue (B), the third color component is green (G1), which is the same color component as the green (G2) of the first color component, or is red (R), which is a color component differing from the first color component and the second color component.

Similarly, if the first color component is green (G1) and the second color component is red (R), then the third color component is the green (G2), which is the same color component as the green (G1) of the first color component, or is blue (B), which is a color component differing from the first color component and the second color component. Also, if the first color component is green (G2) and the second color component is red (R), then the third color component is the green (G1), which is the same color component as the green (G2) of the first color component, or is blue (B), which is a color component differing from the first color component and the second color component.

The third image data is the G2 image data 112 or the R image data 114 if the first image data is the G1 image data 111 and the second image data is the B image data 113. Also, the third image data is the G1 image data 111 or the R image data 114 if the first image data is the G2 image data 112 and the second image data is the B image data 113.

The third image data is the G2 image data 112 or the B image data 113 if the first image data is the G1 image data 111 and the second image data is the R image data 114. Also, the third image data is the G1 image data 111 or the B image data 113 if the first image data is the G2 image data 112 and the second image data is the R image data 114.

A fourth color component is a remaining color component, and the first generation unit 401 generates fourth image data of the remaining color component from a pixel group of the remaining color component from among the RAW image data 100.

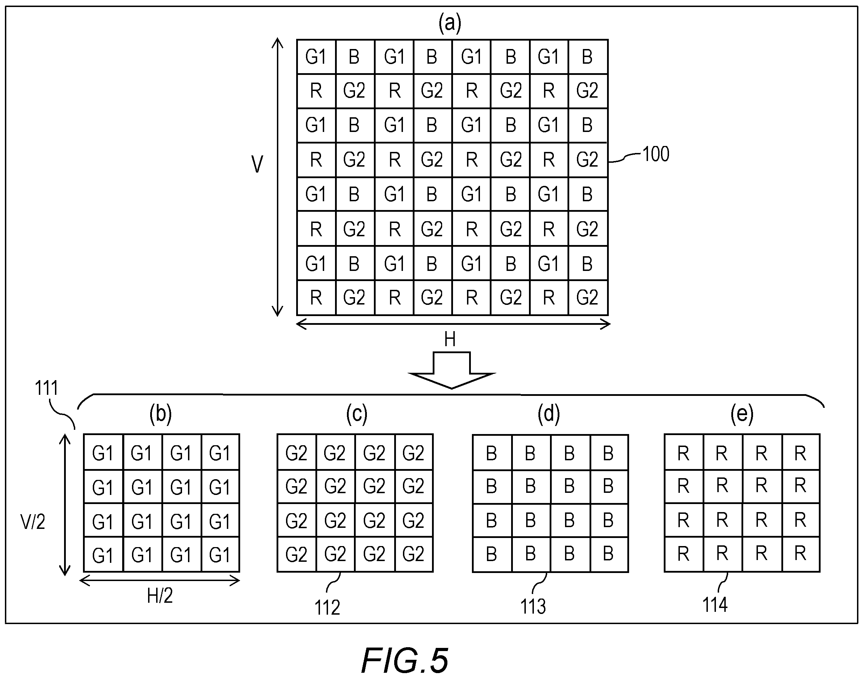

FIG. 5 is a descriptive drawing showing a generation example for component frames by the first generation unit 401.

    (a) is the RAW image data 100 to be encoded. The horizontal direction pixel count of the RAW image data 100 is H (in FIG. 5, H=8), and the vertical direction pixel count is V (in FIG. 5, V=8).

    (b) to (e) show component frames generated by rearranging the color components of the RAW image data 100. The component frame of (b) is the G1 image data 111, the component frame of (c) is the G2 image data 112, the component frame of (d) is the B image data 113, and the component frame of (e) is the R image data 114.

The first generation unit 401 executes the separation of (A) in FIG. 1, thereby rearranging the G1 pixels, the B pixels, the R pixels, and the G2 pixels separated from the RAW image data 100 according to the positions of the color array 101. As a result, the first generation unit 401 generates four component frames including the G1 image data 111, the G2 image data 112, the B image data 113, and the R image data 114 from the one piece of RAW image data. The G1 image data 111, the G2 image data 112, the B image data 113, and the R image data 114 respectively are 1/4 the image size (V/2×H/2) of the RAW image data 100.

Returning to FIG. 4, the encoding unit 402 encodes the second image data generated by the first generation unit 401 on the basis of the first image data generated by the first generation unit 401. Specifically, for example, the encoding unit 402 compensates the pixel positions between the first image data and the second image data to encode the second image data. Here, the "compensation of the pixel positions" refers to compensating a focus pixel in the second image data with a specific reference pixel in the first image data at a position differing from the focus pixel.

The G1 pixel, the G2 pixel, the B pixel, and the R pixel extracted from the same color array 101 of the RAW image data 100 are arranged at the same pixel positions in the respective component frames (G1 image data 111, G2 image data 112, B image data 113, R image data 114). However, among component frames, offsetting of the image due to differences in pixel positions in the color array 101 occurs. Thus, the encoding unit 402 executes pixel position compensation among component frames generated from the same RAW image data 100, similar to the motion compensation among frames in the time axis direction for a normal encoding process.

Here, known examples of the encoding method for pixel position compensation prediction include AVC (Advanced Video Coding) as defined in ISO/IEC 14496-10. The encoding unit 402 executes in-frame prediction encoding for a specific component frame (such as G1 image data 111) to generate an I-picture, and executes inter-frame prediction encoding for the remaining component frames (such as G2 image data 112, B image data 113, R image data 114) to generate a P-picture or a B-picture.

The I-picture is encoded image data attained by encoding completed within a component frame. The P-picture is encoded image data attained by performing inter-component-frame prediction encoding for a maximum of one reference component frame. The B-picture is encoded image data attained by performing inter-component-frame prediction encoding for a maximum of two reference component frames. A detailed configuration example of the encoding unit 402 will be explained below.

<Configuration Example of Encoding Unit 402>

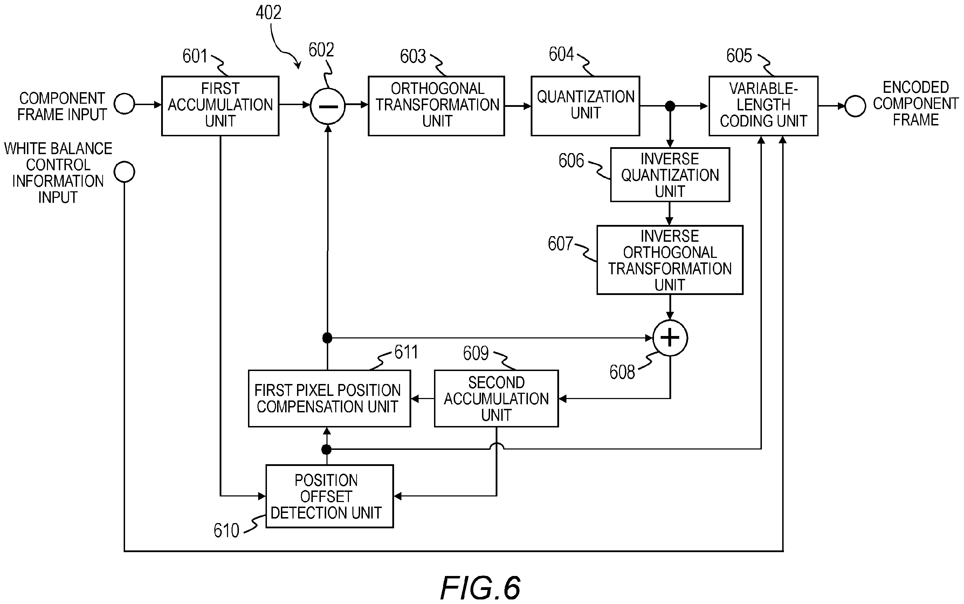

FIG. 6 is a block diagram showing a configuration example of the encoding unit 402. The encoding unit 402 has a first accumulation unit 601, a subtraction unit 602, an orthogonal transformation unit 603, a quantization unit 604, a variable-length coding unit 605, an inverse quantization unit 606, an inverse orthogonal transformation unit 607, an addition unit 608, a second accumulation unit 609, a position offset detection unit 610, and a first pixel position compensation unit 611.

The first accumulation unit 601 accumulates the component frames outputted from the first generation unit 401 (G1 image data 111, G2 image data 112, B image data 113, R image data 114). The component frames accumulated in the first accumulation unit 601 are outputted to the subtraction unit 602 as image data to be encoded in the order that the component frames were inputted. The image data that has been encoded is sequentially deleted from the first accumulation unit 601.

When generating the P-picture or the B-picture, the subtraction unit 602 outputs a difference signal (prediction error value) between a component frame of the inputted original image and a prediction value generated by the first pixel position compensation unit 611 to be described later. Also, when generating the I-picture, the subtraction unit 602 outputs the component frame of the inputted original image as is.

When generating the I-picture, the orthogonal transformation unit 603 performs orthogonal transformation on the component frames of the original image inputted after passing through the subtraction unit 602 without modification. Also, when generating the P-picture or the B-picture, the orthogonal transformation unit 603 performs orthogonal transformation on the above-mentioned difference signal.

The quantization unit 604 converts the frequency coefficient (orthogonal transformation coefficient) for each block inputted from the orthogonal transformation unit 603 into a quantization coefficient. The output from the quantization unit 604 is inputted to the variable-length coding unit 605 and the inverse quantization unit 606.

The variable-length coding unit 605 performs variable-length coding of a motion vector for positional offset from the position offset detection unit 610 (hereinafter, simply referred to as the "motion vector") and outputs the encoded gradation component frames (I-picture, P-picture, B-picture).

The inverse quantization unit 606 performs inverse quantization on a quantized coefficient at the block level, which is the level at which encoding is performed, to decode the frequency coefficient. The inverse orthogonal transformation unit 607 performs inverse orthogonal transformation on the frequency coefficient decoded by the inverse quantization unit 606 to decode the prediction error value (or component frames of original image).

The addition unit 608 adds the decoded prediction error value to a prediction value (to be mentioned later) generated by the first pixel position compensation unit 611. Decoded values (reference component frames) of the picture outputted from the addition unit 608 are accumulated in the second accumulation unit 609. Component frames not referred to in pixel position compensation prediction thereafter are sequentially deleted from the second accumulation unit 609.

The position offset detection unit 610 uses a reference image from the second accumulation unit 609 to detect the motion vector indicating the offset in pixel position for predicting the component frames to be encoded. The motion vector is outputted to the first pixel position compensation unit 611 and the variable-length coding unit 605.

The first pixel position compensation unit 611 outputs the prediction values predicted at the block level for the component frames to be encoded on the basis of the motion vector and the reference component frame. The prediction values are outputted to the subtraction unit 602 and the addition unit 608.

If pixel position compensation prediction is to be performed for a given block, when the component frames to be encoded completely match the prediction values, only the motion vector is encoded. If the component frames to be encoded partially match the prediction values, the motion vector and a difference image are encoded. If none of the component frames to be encoded matches the prediction values, the image for the entire block is encoded.

<Reference Direction Example for Component Frames>

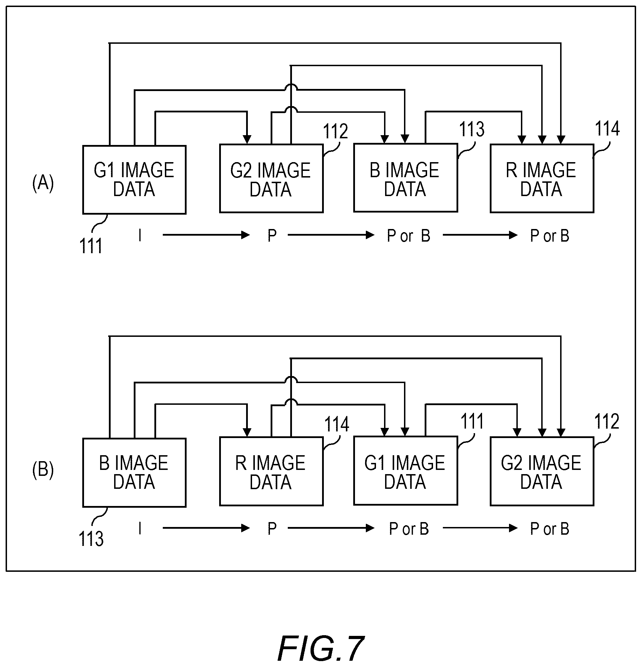

FIG. 7 is a descriptive drawing showing a reference direction example for component frames. (A) shows a reference direction for a case in which the component frames from the same RAW image data 100 are inputted in the order of the G1 image data 111, the G2 image data 112, the B image data 113, and the R image data 114. The G1 image data 111, which is the first component frame, is encoded to an I-picture. The subsequently inputted G2 image data 112 is encoded into a P-picture by inter-frame prediction encoding with the preceding G1 image data 111 as the reference component frame.

The subsequently inputted B image data 113 is encoded into a P-picture or a B-picture by inter-frame prediction encoding with the component frame of at least one of the preceding G1 image data 111 and G2 image data 112 in each block as the reference component frame. The R image data 114 inputted last is encoded into a P-picture or a B-picture by inter-frame prediction encoding with the component frame of at least one of the preceding G1 image data 111, G2 image data 112, and B image data 113 in each block as the reference component frame.

(B) shows a reference direction for a case in which the component frames from the same RAW image data 100 are inputted in the order of the B image data 113, the R image data 114, the G1 image data 111, and the G2 image data 112. The B image data 113, which is the first component frame, is encoded to an I-picture. The subsequently inputted R image data 114 is encoded into a P-picture by inter-frame prediction encoding with the preceding B image data 113 as the reference component frame.

The subsequently inputted G1 image data 111 is encoded into a P-picture or a B-picture by inter-frame prediction encoding with the component frame of at least one of the preceding B image data 113 and R image data 114 as the reference component frame. The G2 image data 112 inputted last is encoded into a P-picture or a B-picture by inter-frame prediction encoding with the component frame of at least one of the preceding B image data 113, R image data 114, and G1 image data 111 as the reference component frame.

The reference directions shown in FIG. 7 are merely examples, and encoding is possible in an input order for component frames other than (A) and (B). In other words, the first component frame is encoded to an I-picture and the subsequent component frames are encoded to a P-picture or a B-picture. Also, this encoding unit 402 uses the luminance value from pixels in the image capture element 353 that do not depend on the color components, and thus, can perform encoding even when differing color components are used as the reference frame.

<Motion Vector Detection Example>

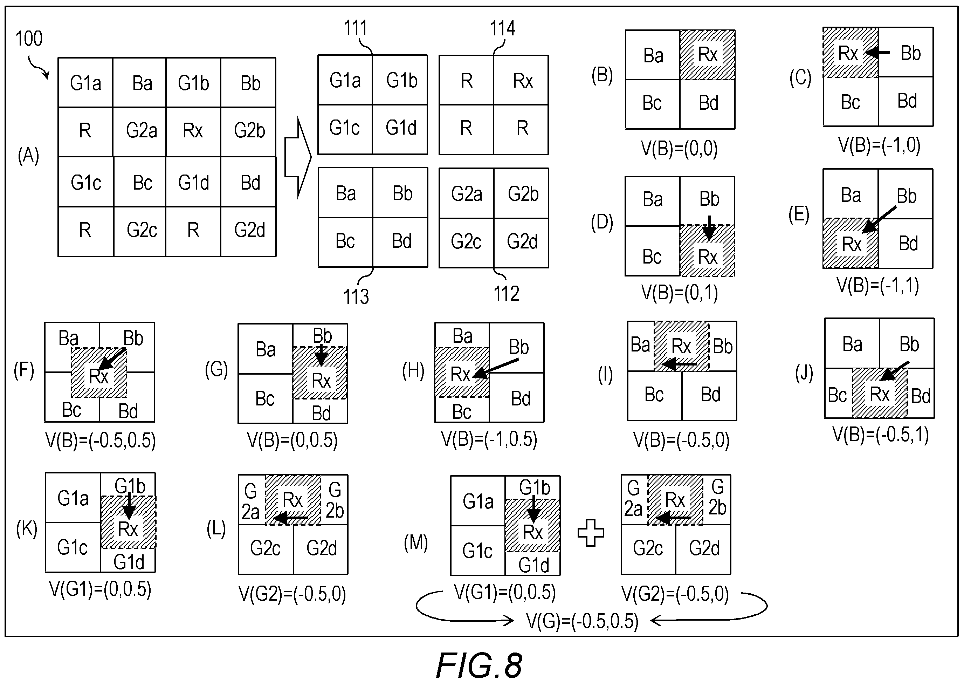

FIG. 8 is a descriptive view showing a detection example for a motion vector. (A) shows the RAW image data 100 and the component frames, and (B) to (M) show a detection example for motion vectors. In FIG. 8, in order to simplify the explanation, as shown in (A), the RAW image data 100 is a frame where H = 4 pixels and V = 4 pixels. Also, in order to distinguish from another instance of the same color component, "a" to "d" and "x" are suffixed onto the reference character of the color component.

Additionally, the positional offset of the reference pixels of the reference component frame in relation to the position of the focus pixel of the component frame to be predicted is set to the motion vector V(x,y). In the motion vector V(x,y), x increases by an offset to the right, x decreases by an offset to the left, y increases by a downward offset, and y decreases by an upward offset. In FIG. 8, the motion vector V(x,y) is indicated by a black arrow.

(B) to (E) show examples for detecting the motion vector V(Rx) when the reference component frame is the B image data 113, the component frame to be predicted is the R image data 114, and the focus pixel is a pixel Rx in the R image data 114. In (B) to (E), the position offset detection unit 610 detects the motion vector for predicting the focus pixel using one reference pixel. As a result, the R image data 114 can be encoded into a P-picture.

In (B), the reference pixel of the B image data 113 is a pixel Bb. The focus pixel Rx is at the same pixel position as the reference pixel Bb. In other words, there is no positional offset between the reference pixel Bb and the focus pixel Rx. Therefore, when predicting the focus pixel Rx using the pixel Bb, the motion vector V(B) = (0,0). That is, the motion vector (B) is not detected.

In (C), the reference pixel of the B image data 113 is a pixel Ba. The focus pixel Rx is at a pixel position offset from the reference pixel Ba by one pixel to the right. In other words, there is a positional offset between the reference pixel Ba and the focus pixel Rx. Therefore, when predicting the focus pixel Rx using the reference pixel Ba, the motion vector V(B) = (-1,0) is detected.

In (D), the reference pixel of the B image data 113 is a pixel Bd. The focus pixel Rx is at a pixel position offset from the reference pixel Bd by one pixel upward. In other words, there is a positional offset between the reference pixel Bd and the focus pixel Rx. Therefore, when predicting the focus pixel Rx using the reference pixel Bd, the motion vector V(B) = (0,1) is detected.

In (E), the reference pixel of the B image data 113 is a pixel Bc. The focus pixel Rx is at a pixel position offset from the reference pixel Bc by one pixel to the right and one pixel upward. In other words, there is a positional offset between the reference pixel Bc and the focus pixel Rx. Therefore, when predicting the focus pixel Rx using the reference pixel Bc, the motion vector V(B) = (-1,1) is detected.

(F) to (J) show examples for detecting the motion vector V(B) when the reference component frame is the B image data 113, the component frame to be predicted is the R image data 114, and the focus pixel is a pixel Rx in the R image data 114. In (F) to (J), the position offset detection unit 610 detects the motion vector for predicting the focus pixel using a plurality of reference pixels of the same color component. As a result, the R image data 114 can be encoded into a P-picture.

In (F), the reference pixels of the B image data 113 are the pixels Ba to Bd. The focus pixel Rx is at the same pixel position as the reference pixel Bb. In predicting the reference pixels Ba to Bd, the average reference pixel position is the center of the reference pixels Ba to Bd, and there is a positional offset from the focus pixel Rx.

In other words, the focus pixel Rx is at a pixel position offset from the center of the reference pixels Ba to Bd by 0.5 pixels to the right and 0.5 pixels upward. Therefore, when predicting the focus pixel Rx using the reference pixels Ba to Bd, the motion vector V(B) = (-0.5,0.5) is detected.

In (G), the reference pixels of the B image data 113 are the pixels Bb and Bd. The focus pixel Rx is at the same pixel position as the reference pixel Bb. In predicting the reference pixels Bb and Bd, the average reference pixel position is the center of the reference pixels Bb and Bd, and there is a positional offset from the focus pixel Rx.

In other words, the focus pixel Rx is at a pixel position offset from the center of the reference pixels Bb and Bd by 0.5 pixels upward. Therefore, when predicting the focus pixel Rx using the reference pixels Bb and Bd, the motion vector V(B) = (0,0.5) is detected.

In (H), the reference pixels of the B image data 113 are the pixels Ba and Bc. The focus pixel Rx is at the same pixel position as the reference pixel Bb. In predicting the reference pixels Ba and Bc, the average reference pixel position is the center of the reference pixels Ba and Bc, and there is a positional offset from the focus pixel Rx.

In other words, the focus pixel Rx is at a pixel position offset from the center of the reference pixels Ba and Bc by 1 pixel to the right and 0.5 pixels upward. Therefore, when predicting the focus pixel Rx using the reference pixels Ba and Bc, the motion vector V(B) = (-1,0.5) is detected.

In (I), the reference pixels of the B image data 113 are the pixels Ba and Bb. The focus pixel Rx is at the same pixel position as the reference pixel Bb. In predicting the reference pixels Ba and Bb, the average reference pixel position is the center of the reference pixels Ba and Bb, and there is a positional offset from the focus pixel Rx.

In other words, the focus pixel Rx is at a pixel position offset from the center of the reference pixels Ba and Bb by 0.5 pixels to the right. Therefore, when predicting the focus pixel Rx using the reference pixels Ba and Bb, the motion vector V(B) = (-0.5,0) is detected.

In (J), the reference pixels of the B image data 113 are the pixels Bc and Bd. The focus pixel Rx is at the same pixel position as the reference pixel Bb. In predicting the reference pixels Bc and Bd, the average reference pixel position is the center of the reference pixels Bc and Bd, and there is a positional offset from the focus pixel Rx.

In other words, the focus pixel Rx is at a pixel position offset from the center of the reference pixels Bc and Bd by 0.5 pixels to the right and 1 pixel upward. Therefore, when predicting the focus pixel Rx using the reference pixels Bc and Bd, the motion vector V(B) = (-0.5,1) is detected.

(K) to (M) show examples for detecting the motion vector V when the reference component frame is the G1 image data 111 and/or the G2 image data 112, the component frame to be predicted is the R image data 114, and the focus pixel is a pixel Rx in the R image data 114. In (K) to (M), the position offset detection unit 610 detects the motion vector for predicting the focus pixel using a plurality of reference pixels of the same color component or differing color components. As a result, the R image data 114 can be encoded into a P-picture or B-picture.

In (K), the reference pixels of the G1 image data 111 are pixels G1b and G1d. The focus pixel Rx is at the same pixel position as the reference pixel G1b. In predicting the reference pixels G1b and G1d, the average reference pixel position is the center of the reference pixels G1b and G1d, and there is a positional offset from the focus pixel Rx.

In other words, the focus pixel Rx is at a pixel position offset from the center of the reference pixels G1b and G1d by 0.5 pixels upward. Therefore, when predicting the focus pixel Rx using the reference pixels G1b and G1d, the motion vector V(G1) = (0,0.5) is detected.

In (L), the reference pixels of the G2 image data 112 are pixels G2a and G2b. The focus pixel Rx is at the same pixel position as the reference pixel G2b. In predicting the reference pixels G2a and G2b, the average reference pixel position is the center of the reference pixels G2a and G2b, and there is a positional offset from the focus pixel Rx.

In other words, the focus pixel Rx is at a pixel position offset from the center of the reference pixels G2a and G2b by 0.5 pixels to the right. Therefore, when predicting the focus pixel Rx using the reference pixels G2a and G2b, the motion vector V(G2) = (-0.5,0) is detected.

In (M), the G1 image data 111 and the G2 image data 112 are reference component frames. Thus, the motion vector of (M) is a resultant motion vector V(G) that is a combination of the motion vector V(G1) of (K) and the motion vector V(G2) of (L). Therefore, when predicting the focus pixel Rx using the reference pixels G1b and G1d and the reference pixels G2a and G2b, the resultant motion vector V(G) = (-0.5,0.5) is detected.

In FIG. 8, the R image data 114 was set to be predicted, but the G1 image data 111, the G2 image data 112, and the B image data 113 may be set to be predicted instead. Also, the R image data 114 may be set to be the reference component frame. Additionally, the reference component frames of both directions in (M) may be differing color components as opposed to the same color component.

In this manner, the G1 pixel, the G2 pixel, the B pixel, and the R pixel extracted from the same color array 101 of the RAW image data 100 are arranged at the same pixel positions in the respective component frames. However, among component frames, offsetting of the image due to differences in pixel positions in the color array 101 occurs. Thus, pixel position compensation prediction among component frames is performed in consideration of the differing pixel positions in the color array 101.

<Example of Pixel Position Compensation Prediction between Component Frames>

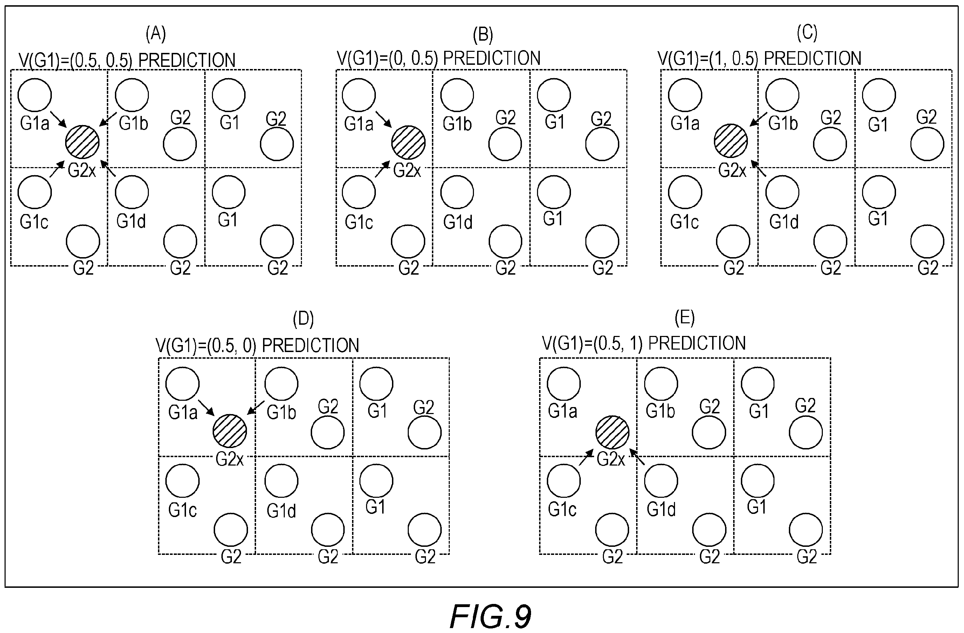

Below an example of pixel position compensation prediction between component frames will be described with reference to FIGs. 9 to 16. In FIGs. 9 to 16, the arrangement of pixels in the RAW image data 100 is indicated with circles. The range of each color array (sample point of component frames) is indicated with frame borders.

FIG. 9 is a descriptive view showing an example 1 of pixel position compensation prediction between component frames. The reference pattern of (A) shows an example in which the component frame to be predicted is the G2 image data 112, and the value of the focus pixel G2x thereof is predicted using the average of four surrounding pixels G1a to G1d of the G1 image data 111 that is the reference component frame adjacent to the focus pixel G2x.

In (A), the pixel G1a and the pixel G2x belong to the same sample point, but the focus pixel G2x is affected by the pixels G1b to G1d due to interpolation. Thus, the range of the reference pixel of the G1 image data 111 that is the reference component frame is offset by 0.5 pixels to the right and 0.5 pixels downward in relation to the position of the focus pixel G2x. Therefore, in this case, the motion vector V(G1) = (0.5,0.5).

In this manner, in (A), by predicting the pixel value of the focus pixel G2x by averaging the four adjacent pixels G1a to G1d, the G2 image data 112 is encoded to the P-picture. Therefore, the G1 image data can be used to perform a prediction based on the pixel position of the focus pixel G2x. Also, it is possible to mitigate encoding distortion included in the decoded value of the G1 image data 111, which is the reference component frame.

The reference pattern of (B) shows an example in which the component frame to be predicted is the G2 image data 112, and the value of the focus pixel G2x thereof is predicted using the average of two adjacent pixels G1a and G1c of the G1 image data 111 that is the reference component frame adjacent to the focus pixel G2x. Such pixel position compensation prediction has a high probability of being selected in a block of an image including a vertical edge. The pixel value of the focus pixel G2x is predicted according to the average of the two adjacent pixels G1a and G1c, and thus, it is possible to mitigate encoding distortion included in the decoded value of the G1 image data 111, which is the reference component frame.

In (B), the pixel G1a and the pixel G2x belong to the same sample point, but the focus pixel G2x is affected by the pixels G1a and G1c due to interpolation. Thus, the range of the reference pixel of the G1 image data 111 that is the reference component frame is offset by 0.5 pixels downward in relation to the position of the focus pixel G2x. Therefore, in this case, the motion vector V(G1) = (0,0.5).

The reference pattern of (C) shows an example in which the component frame to be predicted is the G2 image data 112, and the value of the focus pixel G2x thereof is predicted using the average of two adjacent pixels G1b and G1d of the G1 image data 111 that is the reference component frame adjacent to the focus pixel G2x. Such pixel position compensation prediction has a high probability of being selected in a block of an image including a vertical edge. The pixel value of the focus pixel G2x is predicted according to the average of the two adjacent pixels G1b and G1d, and thus, it is possible to mitigate encoding distortion included in the decoded value of the G1 image data 111, which is the reference component frame.

In (C), the pixel G1a and the pixel G2x belong to the same sample point, but the focus pixel G2x is affected by the pixels G1b and G1d due to interpolation. Thus, the range of the reference pixel of the G1 image data 111 that is the reference component frame is offset by one pixel to the right and 0.5 pixels downward in relation to the position of the focus pixel G2x. Therefore, in this case, the motion vector V(G1) = (1,0.5).

The reference pattern of (D) shows an example in which the component frame to be predicted is the G2 image data 112, and the value of the focus pixel G2x thereof is predicted using the average of two adjacent pixels G1a and G1b of the G1 image data 111 that is the reference component frame adjacent to the focus pixel G2x. Such pixel position compensation prediction has a high probability of being selected in a block of an image including a horizontal edge. The pixel value of the focus pixel G2x is predicted according to the average of the two adjacent pixels G1a and G1b, and thus, it is possible to mitigate encoding distortion included in the decoded value of the G1 image data 111, which is the reference component frame.

In (D), the pixel G1a and the pixel G2x belong to the same sample point, but the focus pixel G2x is affected by the pixels G1a and G1b due to interpolation. Thus, the range of the reference pixel of the G1 image data 111 that is the reference component frame is offset by 0.5 pixels to the right in relation to the position of the focus pixel G2x. Therefore, in this case, the motion vector V(G1) = (0.5,0).

The reference pattern of (E) shows an example in which the component frame to be predicted is the G2 image data 112, and the value of the focus pixel G2x thereof is predicted using the average of two adjacent pixels G1c and G1d of the G1 image data 111 that is the reference component frame adjacent to the focus pixel G2x. Such pixel position compensation prediction has a high probability of being selected in a block of an image including a horizontal edge. The pixel value of the focus pixel G2x is predicted according to the average of the two adjacent pixels G1c and G1d, and thus, it is possible to mitigate encoding distortion included in the decoded value of the G1 image data 111, which is the reference component frame.

In (E), the pixel G1a and the pixel G2x belong to the same sample point, but the focus pixel G2x is affected by the pixels G1c and G1d due to interpolation. Thus, the range of the reference pixel of the G1 image data 111 that is the reference component frame is offset by 0.5 pixels to the right and one pixel downward in relation to the position of the focus pixel G2x. Therefore, in this case, the motion vector V(G 1) = (0.5,1).

In this manner, in (B) to (E), the pixel position compensation prediction has a high probability of being selected in a block of an image including a vertical edge or a horizontal edge. By predicting the pixel value of the focus pixel G2x by averaging the two adjacent pixels, the G2 image data 112 is encoded to the P-picture. Thus, it is possible to mitigate encoding distortion included in the decoded value of the G1 image data 111, which is the reference component frame.

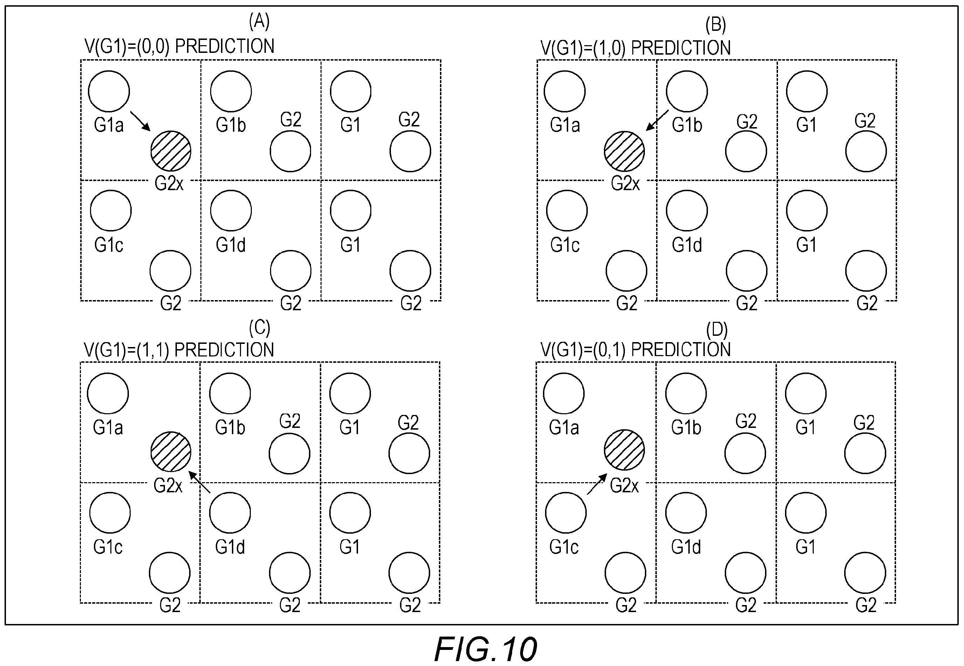

FIG. 10 is a descriptive view showing an example 2 of pixel position compensation prediction between component frames. In FIG. 10, the value of the focus pixel of the component frame to be predicted is predicted according to the value of the pixel at a differing position in a reference component frame that is the same color component as the color component to be predicted. In FIG. 10, the component frame to be predicted is the G2 image data 112, the focus pixel thereof is the pixel G2x, and the reference component frame is the G2 image data 111.

In the reference pattern of (A), the value of the focus pixel G2x of the G2 image data 112 that is the component frame to be predicted is predicted according to the value of the pixel G1a positioned to the upper left in the RAW image data. In this case, the reference pixel (sample point belonging to G1a) of the G1 image data 111 that is the reference component frame is in the same position as the focus pixel (sample point belonging to G2x) in the G2 image data 112 that is the component frame to be predicted. Therefore, the motion vector V(G1) = (0,0). Such motion compensation prediction has a high probability of being selected in a block of an image including a diagonal edge from the lower right to the upper left.

In the reference pattern of (B), the value of the focus pixel G2x of the G2 image data 112 that is the component frame to be predicted is predicted according to the value of the pixel G1b positioned to the upper right in the RAW image data. In this case, the reference pixel (sample point belonging to G1b) of the G1 image data 111 that is the reference component frame is offset by one pixel to the right as compared to the position of the focus pixel (sample point belonging to G2x) in the G2 image data 112 that is the component frame to be predicted. Therefore, the motion vector V(G1) = (1,0). Such motion compensation prediction has a high probability of being selected in a block of an image including a diagonal edge from the lower left to the upper right.

In the reference pattern of (C), the value of the focus pixel G2x of the G2 image data 112 that is the component frame to be predicted is predicted according to the value of the pixel G1c positioned to the lower left in the RAW image data. In this case, the reference pixel (sample point belonging to G1c) of the G1 image data 111 that is the reference component frame is offset by one pixel downward as compared to the position of the focus pixel (sample point belonging to G2x) in the G2 image data 112 that is the component frame to be predicted. Therefore, the motion vector V(G1) = (0,1). Such motion compensation prediction has a high probability of being selected in a block of an image including a diagonal edge from the lower right to the upper left.

In the reference pattern of (D), the value of the focus pixel G2x of the G2 image data 112 that is the component frame to be predicted is predicted according to the value of the pixel G1d positioned to the lower right in the RAW image data 100. In this case, the reference pixel (sample point belonging to G1d) of the G1 image data 111 that is the reference component frame is offset by one pixel to the right and one pixel downward as compared to the position of the focus pixel (sample point belonging to G2x) in the G2 image data 112 that is the component frame to be predicted. Therefore, the motion vector V(G1) = (1,1). Such motion compensation prediction has a high probability of being selected in a block of an image including a diagonal edge from the lower left to the upper right.

In this manner, by predicting the pixel value of the focus pixel G2x using one pixel G1, the G2 image data 112 is encoded to the P-picture. Thus, it is possible to mitigate encoding distortion included in the decoded value of the G1 image data 111, which is the reference component frame.

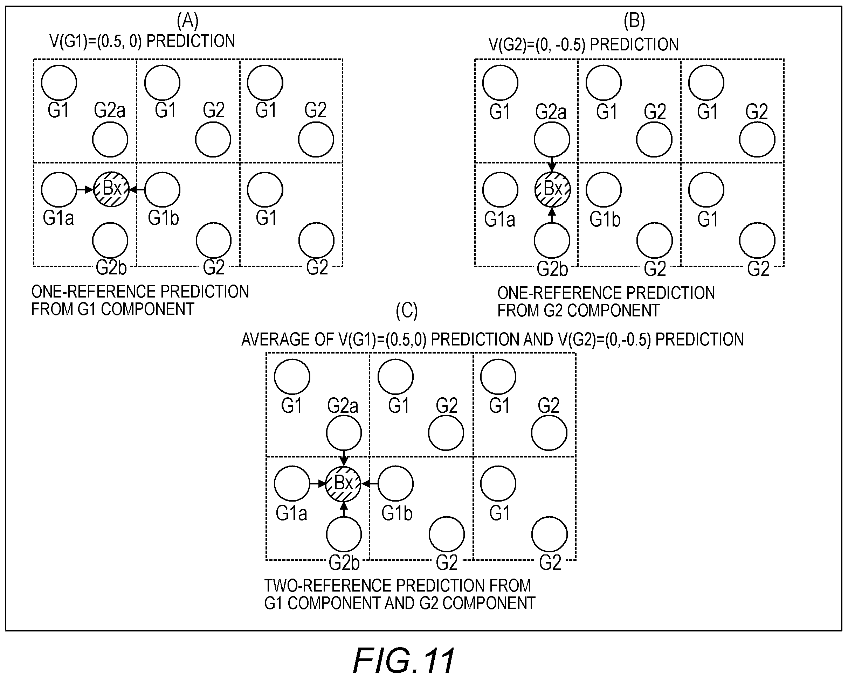

FIG. 11 is a descriptive view showing an example 3 of pixel position compensation prediction between component frames. In FIG. 11, the value of the focus pixel of the component frame to be predicted is predicted according to the value of the pixel at a differing position in a reference component frame that differs in color component from the component frame to be predicted. In FIG. 11, the component frame to be predicted is the B image data 113, the focus pixel thereof is the pixel Bx, and the reference component frame is the G1 image data 111 or the G2 image data 112.

The reference pattern of (A) shows an example in which the value of the focus pixel Bx of the B image data 113 that is the component frame to be predicted is predicted using the average of two adjacent pixels G1a and G1b of the G1 image data 111 that is the reference component frame adjacent to the focus pixel Bx. By predicting the pixel value of the focus pixel Bx by averaging the two adjacent pixels G1a and G1b, the B image data 113 is encoded to the P-picture. Such pixel position compensation prediction has a high probability of being selected in a block of an image including a horizontal edge. Also, it is possible to mitigate encoding distortion included in the decoded value of the G1 image data 111, which is the reference component frame.

In (A), the pixel G1a and the focus pixel Bx belong to the same sample point, but the focus pixel Bx is affected by the pixels G1a and G1b due to interpolation. Thus, the range of the reference pixel of the G1 image data 111 that is the reference component frame is offset by 0.5 pixels to the right in relation to the position of the focus pixel Bx. Therefore, in this case, the motion vector V(G1) = (0.5,0).

The reference pattern of (B) shows an example in which the value of the focus pixel Bx of the B image data 113 that is the component frame to be predicted is predicted using the average of two adjacent pixels G2a and G2b of the G2 image data 111 that is the reference component frame adjacent to the focus pixel Bx. By predicting the pixel value of the focus pixel Bx by averaging the two adjacent pixels G2a and G2b, the B image data 113 is encoded to the P-picture. Such pixel position compensation prediction has a high probability of being selected in a block of an image including a vertical edge. Also, it is possible to mitigate encoding distortion included in the decoded value of the G2 image data 112, which is the reference component frame.

In (B), the reference pixel G2b and the focus pixel Bx belong to the same sample point, but the focus pixel Bx is affected by the pixels G2a and G2b due to interpolation. Thus, the range of the reference pixel of the G2 image data 112 that is the reference component frame is offset by 0.5 pixels upward in relation to the position of the focus pixel Bx. Therefore, in this case, the motion vector V(G2) = (0,-0.5).

The reference pattern of (C) is a combination of the pixel position compensation prediction of (A) and the pixel position compensation prediction of (B). In other words, (C) is an example in which the value of the focus pixel Bx of the B image data 113 that is the component frame to be predicted is predicted using the average of two adjacent pixels G1a and G1b of the G1 image data 111 and two adjacent pixels G2a and G2b of the G2 image data 112, the G1 image data 111 and the G2 image data 112 being the reference component frames adjacent to the focus pixel Bx.

By predicting the pixel value of the focus pixel Bx by averaging the four adjacent pixels G1a, G1b, G2a, and G2b, the B image data 113 is encoded to the B-picture. Thus, it is possible to further mitigate encoding distortion included in the decoded value of the G1 image data 111 and the G2 image data 112, which are the reference component frames.

In (C), the pixels G1a and G2b and the focus pixel Bx belong to the same sample point, but the focus pixel Bx is affected by the pixels G1a, G1b, G2a, and G2b due to interpolation. Thus, the range of the reference pixel of the G1 image data 111 that is the reference component frame is offset by 0.5 pixels to the right in relation to the position of the focus pixel Bx, and the range of the reference pixel of the G2 image data 112 is offset by 0.5 pixels upward in relation to the position of the focus pixel Bx. Therefore, in this case, the motion vector V(G) is defined as V(G1) + V(G2) = (0.5,-0.5).

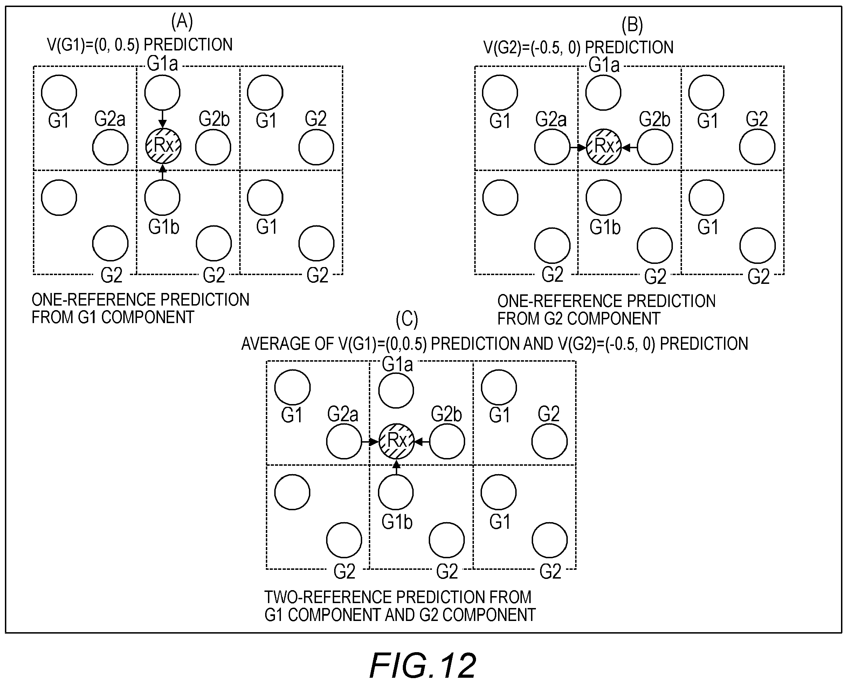

FIG. 12 is a descriptive view showing an example 4 of pixel position compensation prediction between component frames. In FIG. 12, the value of the focus pixel of the component frame to be predicted is predicted according to the value of the pixel at a differing position in a reference component frame that differs in color component from the component frame to be predicted. In FIG. 12, the component frame to be predicted is the R image data 114, the focus pixel thereof is the pixel Rx, and the reference component frame is the G1 image data 111 or the G2 image data 112.

The reference pattern of (A) shows an example in which the value of the focus pixel Rx of the R image data 114 that is the component frame to be predicted is predicted using the average of two adjacent pixels G1a and G1b of the G1 image data 111 that is the reference component frame adjacent to the focus pixel Rx. By predicting the pixel value of the focus pixel Rx by averaging the two adjacent pixels G1a and G1b, the R image data 114 is encoded to the P-picture. Such pixel position compensation prediction has a high probability of being selected in a block of an image including a vertical edge. Also, it is possible to mitigate encoding distortion included in the decoded value of the G1 image data 111, which is the reference component frame.

In (A), the pixel G1a and the focus pixel Rx belong to the same sample point, but the focus pixel Rx is affected by the pixels G1a and G1b due to interpolation. Thus, the range of the reference pixel of the G1 image data 111 that is the reference component frame is offset by 0.5 pixels downward in relation to the position of the focus pixel Rx. Therefore, in this case, the motion vector V(G1) = (0,0.5).

The reference pattern of (B) shows an example in which the value of the focus pixel Rx of the R image data 114 that is the component frame to be predicted is predicted using the average of two adjacent pixels G2a and G2b of the G2 image data 112 that is the reference component frame adjacent to the focus pixel Rx. By predicting the pixel value of the focus pixel Rx by averaging the two adjacent pixels G2a and G2b, the R image data 114 is encoded to the P-picture. Such pixel position compensation prediction has a high probability of being selected in a block of an image including a horizontal edge. Also, it is possible to mitigate encoding distortion included in the decoded value of the G2 image data 112, which is the reference component frame.

In (B), the reference pixel G2b and the focus pixel Rx belong to the same sample point, but the focus pixel Rx is affected by the pixels G2a and G2b due to interpolation. Thus, the range of the reference pixel of the G2 image data 112 that is the reference component frame is offset by 0.5 pixels to the left in relation to the position of the focus pixel Rx. Therefore, in this case, the motion vector V(G2) = (-0.5,0).

The reference pattern of (C) is a combination of the pixel position compensation prediction of (A) and the pixel position compensation prediction of (B). In other words, (C) is an example in which the value of the focus pixel Rx of the R image data 114 that is the component frame to be predicted is predicted using the average of two adjacent pixels G1a and G1b of the G1 image data 111 and two adjacent pixels G2a and G2b of the G2 image data 112, the G1 image data 111 and the G2 image data 112 being the reference component frames adjacent to the focus pixel Rx.

By predicting the pixel value of the focus pixel Bx by averaging the four adjacent pixels G1a, G1b, G2a, and G2b, the R image data 114 is encoded to the B-picture. Thus, it is possible to mitigate encoding distortion included in the decoded value of the G1 image data 111 and the G2 image data 112, which are the reference component frames.

In (C), the pixels G1a and G2b and the focus pixel Rx belong to the same sample point, but the focus pixel Rx is affected by the pixels G1a, G1b, G2a, and G2b due to interpolation. Thus, the range of the reference pixel of the G1 image data 111 that is the reference component frame is offset by 0.5 pixels downward in relation to the position of the focus pixel Rx, and the range of the reference pixel of the G2 image data 112 is offset by 0.5 pixels to the left in relation to the position of the focus pixel Rx. Therefore, in this case, the motion vector V(G) is defined as V(G1) + V(G2) = (-0.5,0.5).

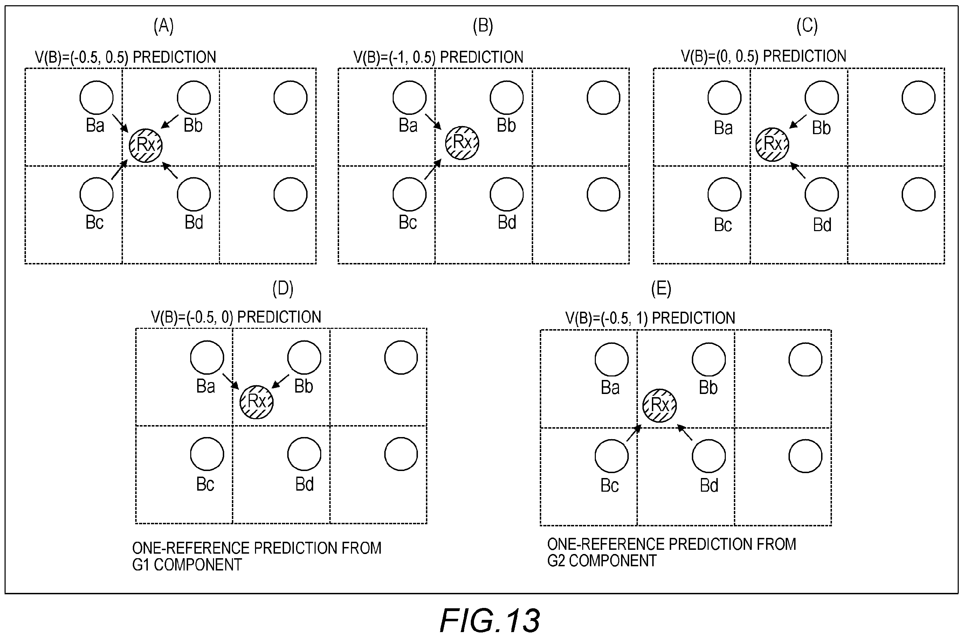

FIG. 13 is a descriptive view showing an example 5 of pixel position compensation prediction between component frames. The reference pattern of (A) shows an example in which the component frame to be predicted is the R image data 114, and the value of the focus pixel Rx thereof is predicted using the average of four surrounding pixels Ba to Bd of the B image data 113 that is the reference component frame adjacent to the focus pixel Rx.

In (A), the pixel Bb and the pixel Rx belong to the same sample point, but the focus pixel Rx is affected by the pixels Bb to Bd due to interpolation. Thus, the range of the reference pixel of the B image data 113 that is the reference component frame is offset by 0.5 pixels to the left and 0.5 pixels downward in relation to the position of the focus pixel Rx. Therefore, in this case, the motion vector V(B) = (-0.5,0.5).

In this manner, by predicting the pixel value of the focus pixel Rx by averaging the four adjacent pixels Ba to Bd, the R image data 114 is encoded to the P-picture. Therefore, the B image can be used to perform a prediction based on the pixel position of the focus pixel Rx. Also, it is possible to mitigate encoding distortion included in the decoded value of the B image data 113, which is the reference component frame.

The reference pattern of (B) shows an example in which the component frame to be predicted is the R image data 114, and the value of the focus pixel Rx thereof is predicted using the average of two adjacent pixels Ba and Bc of the B image data 113 that is the reference component frame adjacent to the focus pixel Rx. Such pixel position compensation prediction has a high probability of being selected in a block of an image including a vertical edge. The pixel value of the focus pixel Rx is predicted according to the average of the two adjacent pixels Ba and Bc, and thus, it is possible to mitigate encoding distortion included in the decoded value of the B image data 113, which is the reference component frame.

In (B), the pixel Bb and the pixel Rx belong to the same sample point, but the focus pixel Rx is affected by the pixels Ba and Bc due to interpolation. Thus, the range of the reference pixel of the B image data 113 that is the reference component frame is offset by one pixel to the left and 0.5 pixels downward in relation to the position of the focus pixel Rx. Therefore, in this case, the motion vector V(B) = (-1,0.5).

The reference pattern of (C) shows an example in which the component frame to be predicted is the R image data 114, and the value of the focus pixel Rx thereof is predicted using the average of two adjacent pixels Bb and Bd of the B image data 113 that is the reference component frame adjacent to the focus pixel Rx. Such pixel position compensation prediction has a high probability of being selected in a block of an image including a vertical edge. The pixel value of the focus pixel Rx is predicted according to the average of the two adjacent pixels Bb and Bd, and thus, it is possible to mitigate encoding distortion included in the decoded value of the B image data 113, which is the reference component frame.

In (C), the pixel Bb and the pixel Rx belong to the same sample point, but the focus pixel Rx is affected by the pixels Bb and Bd due to interpolation. Thus, the range of the reference pixel of the B image data 113 that is the reference component frame is offset by 0.5 pixels downward in relation to the position of the focus pixel Rx. Therefore, in this case, the motion vector V(B) = (0,0.5).

The reference pattern of (D) shows an example in which the component frame to be predicted is the R image data 114, and the value of the focus pixel Rx thereof is predicted using the average of two adjacent pixels Ba and Bb of the B image data 113 that is the reference component frame adjacent to the focus pixel Rx. Such pixel position compensation prediction has a high probability of being selected in a block of an image including a horizontal edge. The pixel value of the focus pixel Rx is predicted according to the average of the two adjacent pixels Ba and Bb, and thus, it is possible to mitigate encoding distortion included in the decoded value of the B image data 113, which is the reference component frame.

In (D), the pixel Bb and the pixel Rx belong to the same sample point, but the focus pixel Rx is affected by the pixels Ba and Bb due to interpolation. Thus, the range of the reference pixel of the B image data 113 that is the reference component frame is offset by 0.5 pixels to the left in relation to the position of the focus pixel Rx. Therefore, in this case, the motion vector V(B) = (-0.5,0).

The reference pattern of (E) shows an example in which the component frame to be predicted is the R image data 114, and the value of the focus pixel Rx thereof is predicted using the average of two adjacent pixels Bc and Bd of the B image data 113 that is the reference component frame adjacent to the focus pixel Rx. Such pixel position compensation prediction has a high probability of being selected in a block of an image including a horizontal edge. The pixel value of the focus pixel Rx is predicted according to the average of the two adjacent pixels Bc and Bd, and thus, it is possible to mitigate encoding distortion included in the decoded value of the B image data 113, which is the reference component frame.

In (E), the pixel Bb and the pixel Rx belong to the same sample point, but the focus pixel Rx is affected by the pixels Bc and Bd due to interpolation. Thus, the range of the reference pixel of the B image data 113 that is the reference component frame is offset by 0.5 pixels to the left and one pixel downward in relation to the position of the focus pixel Rx. Therefore, in this case, the motion vector V(B) = (-0.5,1).

In this manner, in (B) to (E), by predicting the pixel value of the focus pixel Rx by averaging two adjacent pixels, the R image data 114 is encoded to the P-picture. Thus, it is possible to mitigate encoding distortion included in the decoded value of the B image data 113, which is the reference component frame.

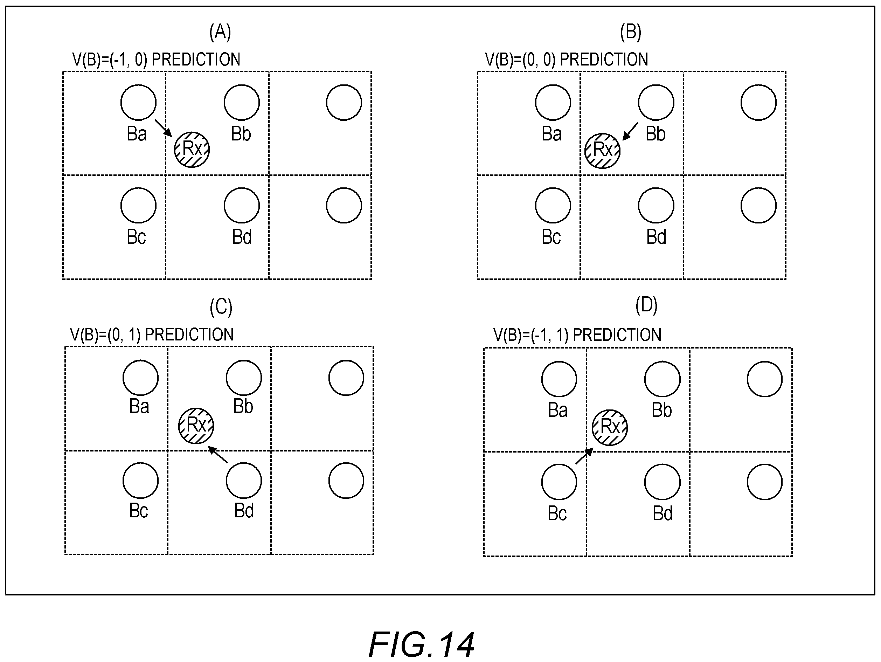

FIG. 14 is a descriptive view showing an example 6 of pixel position compensation prediction between component frames. In FIG. 14, the value of the focus pixel of the component frame to be predicted is predicted according to the value of the pixel at a differing position in a reference component frame that is the same color component as the color component to be predicted. In FIG. 14, the component frame to be predicted is the R image data 114, the focus pixel thereof is the pixel Rx, and the reference component frame is the B image data 113.

In the reference pattern of (A), the value of the focus pixel Rx of the R image data 114 that is the component frame to be predicted is predicted according to the value of the pixel Ba positioned to the upper left in the RAW image data 100. In this case, the reference pixel (sample point belonging to Ba) of the B image data 113 that is the reference component frame is offset by one pixel to the left as compared to the position of the focus pixel (sample point belonging to Rx) in the R image data 114 that is the component frame to be predicted. Therefore, the motion vector V(B) = (-1,0). Such motion compensation prediction has a high probability of being selected in a block of an image including a diagonal edge from the lower right to the upper left.

In the reference pattern of (B), the value of the focus pixel Rx of the R image data 114 that is the component frame to be predicted is predicted according to the value of the pixel Bb positioned to the upper right in the RAW image data 100. In this case, the reference pixel (sample point belonging to Bb) of the B image data 113 that is the reference component frame is in the same position as the focus pixel (sample point belonging to Rx) in the R image data 114 that is the component frame to be predicted. Therefore, the motion vector V(B) = (0,0). Such motion compensation prediction has a high probability of being selected in a block of an image including a diagonal edge from the lower left to the upper right.

In the reference pattern of (C), the value of the focus pixel Rx of the R image data 114 that is the component frame to be predicted is predicted according to the value of the pixel Bd positioned to the lower right in the RAW image data 100. In this case, the reference pixel (sample point belonging to Bd) of the B image data 113 that is the reference component frame is offset by one pixel downward as compared to the position of the focus pixel (sample point belonging to Rx) in the R image data 114 that is the component frame to be predicted. Therefore, the motion vector V(B) = (0,1). Such motion compensation prediction has a high probability of being selected in a block of an image including a diagonal edge from the upper left to the lower right.

In the reference pattern of (D), the value of the focus pixel Rx of the R image data 114 that is the component frame to be predicted is predicted according to the value of the pixel Bc positioned to the lower right in the RAW image data 100. In this case, the reference pixel (sample point belonging to Bc) of the B image data 113 that is the reference component frame is offset by one pixel to the right and one pixel downward as compared to the position of the focus pixel (sample point belonging to Rx) in the R image data 114 that is the component frame to be predicted. Therefore, the motion vector V(B) = (-1,1). Such motion compensation prediction has a high probability of being selected in a block of an image including a diagonal edge from the upper right to the lower left.

In this manner, by predicting the pixel value of the focus pixel Rx using one pixel B, the R image data 114 is encoded to the P-picture. Thus, it is possible to mitigate encoding distortion included in the decoded value of the B image data 113, which is the reference component frame.

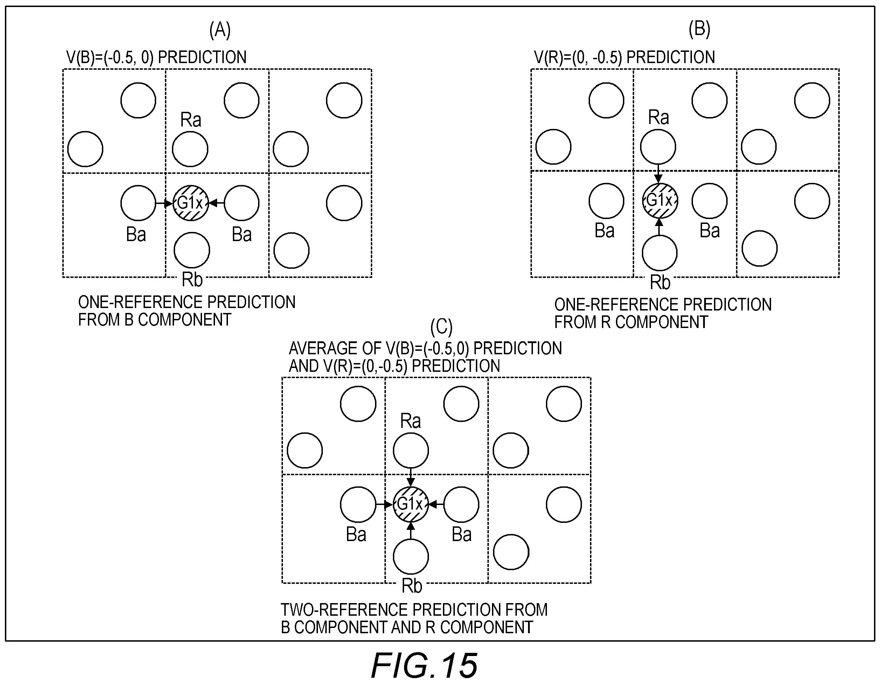

FIG. 15 is a descriptive view showing an example 7 of pixel position compensation prediction between component frames. In FIG. 15, the value of the focus pixel of the component frame to be predicted is predicted according to the value of the pixel at a differing position in a reference component frame that differs in color component from the component frame to be predicted. In FIG. 15, the component frame to be predicted is the G1 image data 111, the focus pixel thereof is the pixel G1x, and the reference component frame is the B image data 113 or the R image data 114.

The reference pattern of (A) shows an example in which the value of the focus pixel G1x of the G1 image data 111 that is the component frame to be predicted is predicted using the average of two adjacent pixels Ba and Bb of the B image data 113 that is the reference component frame adjacent to the focus pixel G1x. By predicting the pixel value of the focus pixel G1x by averaging the two adjacent pixels Ba and Bb, the G1 image data 111 is encoded to the P-picture. Such pixel position compensation prediction has a high probability of being selected in a block of an image including a horizontal edge. Also, it is possible to mitigate encoding distortion included in the decoded value of the B image data 113, which is the reference component frame.

In (A), the pixel Bb and the focus pixel G1x belong to the same sample point, but the focus pixel G1x is affected by the pixels Ba and Bb due to interpolation. Thus, the range of the reference pixel of the B image data 113 that is the reference component frame is offset by 0.5 pixels to the left in relation to the position of the focus pixel G1x. Therefore, in this case, the motion vector V(B) = (-0.5,0).

The reference pattern of (B) shows an example in which the value of the focus pixel G1x of the G1 image data 111 that is the component frame to be predicted is predicted using the average of two adjacent pixels Ra and Rb of the R image data 114 that is the reference component frame adjacent to the focus pixel G1x. By predicting the pixel value of the focus pixel G1x by averaging the two adjacent pixels Ra and Rb, the G1 image data 111 is encoded to the P-picture. Such pixel position compensation prediction has a high probability of being selected in a block of an image including a vertical edge. Also, it is possible to mitigate encoding distortion included in the decoded value of the R image data 114, which is the reference component frame.

In (B), the reference pixel Rb and the focus pixel G1x belong to the same sample point, but the focus pixel G1x is affected by the pixels Ra and Rb due to interpolation. Thus, the range of the reference pixel of the R image data 114 that is the reference component frame is offset by 0.5 pixels upward in relation to the position of the focus pixel G1x. Therefore, in this case, the motion vector V(R) = (0,-0.5).

The reference pattern of (C) is a combination of the pixel position compensation prediction of (A) and the pixel position compensation prediction of (B). In other words, (C) is an example in which the value of the focus pixel G1x of the G1 image data 111 that is the component frame to be predicted is predicted using the average of two adjacent pixels Ba and Bb of the B image data 113 and two adjacent pixels Ra and Rb of the R image data 114, the B image data 113 and the R image data 114 being the reference component frames adjacent to the focus pixel G1x.

By predicting the pixel value of the focus pixel G1x by averaging the four adjacent pixels Ba, Bb, Ra, and Rb, the G1 image data 111 is encoded to the B-picture. Thus, it is possible to mitigate encoding distortion included in the decoded value of the G1 image data 111 and the R image data 114, which are the reference component frames.

In (C), the pixels Bb and Rb and the focus pixel G1x belong to the same sample point, but the focus pixel G1x is affected by the pixels Ba, Bb, Ra, and Rb due to interpolation. Thus, the range of the reference pixel of the B image data 113 that is the reference component frame is offset by 0.5 pixels to the left in relation to the position of the focus pixel G1x, and the range of the reference pixel of the R image data 114 is offset by 0.5 pixels upward in relation to the position of the focus pixel G1x. Therefore, in this case, the motion vector V(G) is defined as V(G1) + V(R) = (-0.5,-0.5).

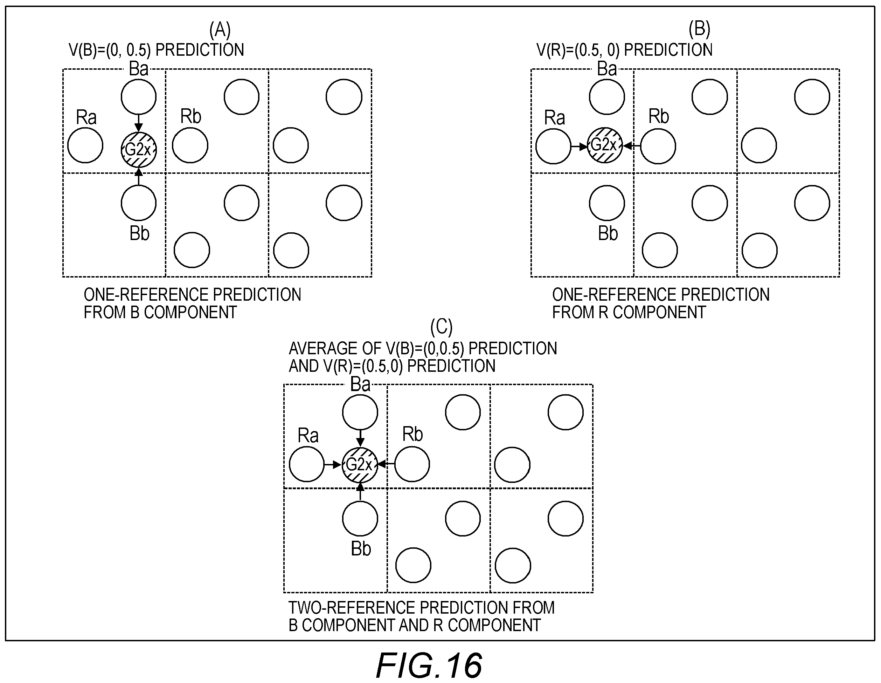

FIG. 16 is a descriptive view showing an example 4 of pixel position compensation prediction between component frames. In FIG. 16, the value of the focus pixel of the component frame to be predicted is predicted according to the value of the pixel at a differing position in a reference component frame that differs in color component from the component frame to be predicted. In FIG. 16, the component frame to be predicted is the G2 image data 112, the focus pixel thereof is the pixel G2x, and the reference component frame is the B image data 113 or the R image data 114.

The reference pattern of (A) shows an example in which the value of the focus pixel G2x of the G2 image data 112 that is the component frame to be predicted is predicted using the average of two adjacent pixels Ba and Bb of the B image data 113 that is the reference component frame adjacent to the focus pixel G2x. By predicting the pixel value of the focus pixel G2x by averaging the two adjacent pixels Ba and Bb, the G2 image data 112 is encoded to the P-picture. Such pixel position compensation prediction has a high probability of being selected in a block of an image including a vertical edge. Also, it is possible to mitigate encoding distortion included in the decoded value of the B image data 113, which is the reference component frame.

In (A), the pixel Ba and the focus pixel G2x belong to the same sample point, but the focus pixel G2x is affected by the pixels Ba and Bb due to interpolation. Thus, the range of the reference pixel of the B image data 113 that is the reference component frame is offset by 0.5 pixels downward in relation to the position of the focus pixel G2x. Therefore, in this case, the motion vector V(B) = (0,0.5).

The reference pattern of (B) shows an example in which the value of the focus pixel G2x of the G2 image data 112 that is the component frame to be predicted is predicted using the average of two adjacent pixels Ra and Rb of the R image data 114 that is the reference component frame adjacent to the focus pixel G2x. By predicting the pixel value of the focus pixel G2x by averaging the two adjacent pixels Ra and Rb, the G2 image data 112 is encoded to the P-picture. Such pixel position compensation prediction has a high probability of being selected in a block of an image including a horizontal edge. Also, it is possible to mitigate encoding distortion included in the decoded value of the R image data 114, which is the reference component frame.

In (B), the reference pixel Rb and the focus pixel G2x belong to the same sample point, but the focus pixel G2x is affected by the pixels Ra and Rb due to interpolation. Thus, the range of the reference pixel of the R image data 114 that is the reference component frame is offset by 0.5 pixels to the right in relation to the position of the focus pixel G2x. Therefore, in this case, the motion vector V(R) = (0.5,0).

The reference pattern of (C) is a combination of the pixel position compensation prediction of (A) and the pixel position compensation prediction of (B). In other words, (C) is an example in which the value of the focus pixel G2x of the G2 image data 112 that is the component frame to be predicted is predicted using the average of two adjacent pixels Ba and Bb of the B image data 113 and two adjacent pixels Ra and Rb of the R image data 114, the B image data 113 and the R image data 114 being the reference component frames adjacent to the focus pixel G2x.

By predicting the pixel value of the focus pixel Bx by averaging the four adjacent pixels Ba, Bb, Ra, and Rb, the G2 image data 112 is encoded to the B-picture. Thus, it is possible to further mitigate encoding distortion included in the decoded value of the B image data 113 and the R image data 114, which are the reference component frames.

In (C), the pixels Ba and Rb and the focus pixel G2x belong to the same sample point, but the focus pixel G2x is affected by the pixels Ba, Bb, Ra, and Rb due to interpolation. Thus, the range of the reference pixel of the B image data 113 that is the reference component frame is offset by 0.5 pixels downward in relation to the position of the focus pixel G2x, and the range of the reference pixel of the R image data 114 is offset by 0.5 pixels to the right in relation to the position of the focus pixel G2x. Therefore, in this case, the motion vector V(G) is defined as V(B) + V(R) = (0.5,0.5).

When the encoding unit 402 performs encoding to a P-picture or a B-picture, the pixel position compensation predictions shown in FIGs. 9 to 16 are tested, and the pixel position compensation prediction with the smallest difference is selected. For example, if the R image data 114 is to be predicted with reference to the B image data 113, then the encoding unit 402 tests the pixel position compensation prediction for each reference pattern of (A) to (E) in FIG. 13 and (A) to (D) in FIG. 14, and selects the reference pattern with the smallest difference. As a result, suitable and efficient pixel position compensation prediction can be executed.

In particular, if the reference pattern crosses an edge of the image, the difference in value between the pixels in the reference component frames surrounding the edge and the focus pixel of the component frame to be predicted is large. Thus, by appropriately selecting the reference pattern, it is possible to identify a reference pattern that does not cross an edge to improve the encoding efficiency.

<Data Structure Example of Encoded Component Frame>

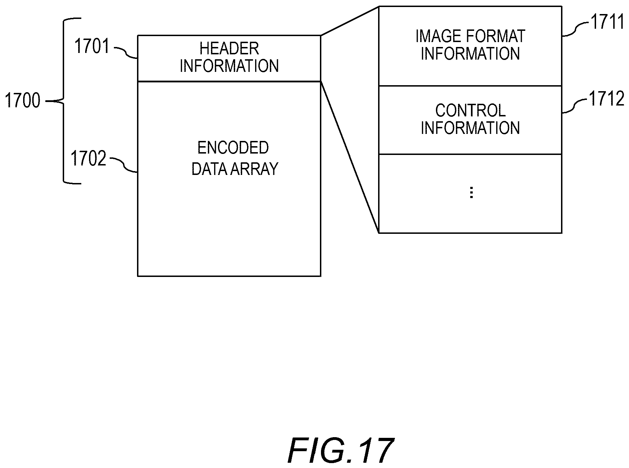

FIG. 17 is a descriptive drawing showing a data structure example for an encoded component frame. An encoded component frame 1700 has header information 1701 and an encoded data array 1702. The header information 1701 is information added by the encoding unit 402. The header information 1701 includes image format information 1711 and control information 1712.

The image format information 1711 includes the size of the component frame prior to encoding, the size of the encoded component frame 1700, identification information specifying the pattern of the color array 101, and the pixel count of the component frame. The control information 1712 includes the type of encoded component frame 1700 (any one of I-picture, P-picture, B-picture), identification information for the reference component frame, and a reference pattern used for the pixel position compensation prediction shown in FIGs. 9 to 16. The encoded data array 1702 is a data array in which the component frame is encoded.

<Example of Encoding Process Steps>

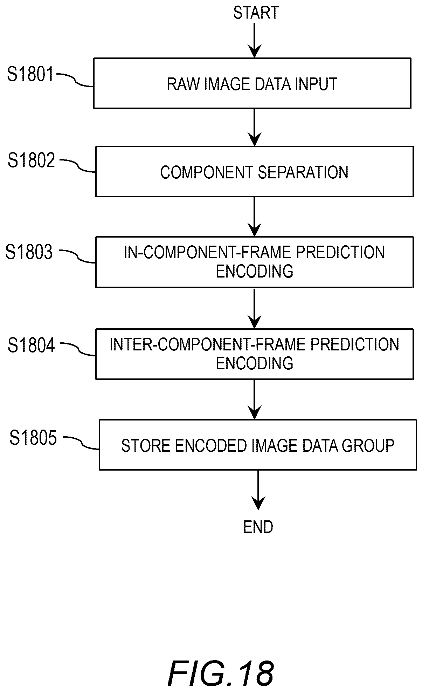

FIG. 18 is a flowchart showing an example of encoding process steps by the encoder 400. The encoder 400 receives input of the RAW image data 100 (step S1801), and uses the first generation unit 401 to separate the pixel groups of the RAW image data 100 for each color component and generate a component frame for each color component (step S1802). Next, the encoder 400 uses the encoding unit 402 to generate an I-picture by executing in-component-frame prediction encoding (step S1803).

Then, the encoder 400 uses the encoding unit 402 to execute inter-component-frame prediction encoding for the remaining component frames to generate a P-picture or a B-picture (step S1804). Lastly, the encoder 400 uses the recording unit 403 to store the encoded image data group that was encoded in steps S1803 and S1804 in the storage device 302 (step S1805).

<Mechanical Configuration Example of Decoder>

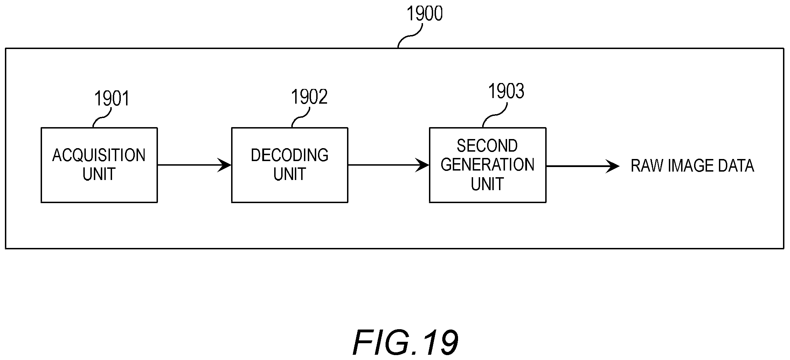

FIG. 19 is a block diagram showing a mechanical configuration example of the decoder. The decoder 1900 has an acquisition unit 1901, a decoding unit 1902, and a second generation unit 1903. The acquisition unit 1901 acquires the encoded component frame 1700 that was encoded by the encoder 400, the decoding unit 1902 decodes the encoded component frame 1700 to the component frame using the control information 1712, and the second generation unit 1903 generates the RAW image data 100 from the decoded component frames using the image format information 1711.

The acquisition unit 1901, the decoding unit 1902, and the second generation unit 1903 are specifically functions realized by the LSI 304, or by the processor 301 executing programs stored in the storage device 302, for example.

The acquisition unit 1901 acquires first encoded image data and second encoded image data. The first encoded image data is data attained by performing in-frame prediction encoding of the first image data constituted of pixel groups of the first color component. The second encoded image data is acquired by encoding, on the basis of the first image data, the second image data constituted of pixel groups of the second color component differing from the first color component.

Also, the acquisition unit 1901 acquires third encoded image data. The third encoded image data is data attained by encoding, on the basis of the first encoding data, the third image data constituted of pixel groups of the third color component. Also, the acquisition unit 1901 acquires fourth encoded image data. The fourth encoded image data is data attained by encoding, on the basis of the first image data, fourth image data constituted of pixel groups of the fourth color component.

The decoding unit 1902 decodes the first encoded image data acquired by the acquisition unit 1901 to the first image data using the control information 1712, and decodes the second encoded image data acquired by the acquisition unit 1901 to the second image data on the basis of the first image data. Specifically, for example, the decoding unit 1902 decodes the first encoded image data that is an I-picture to the first image data, and decodes the second image data that is a P-picture to the second image data using the first image data according to the reference pattern applied to pixel position compensation prediction.

Also, the decoding unit 1902 decodes the third encoded image data acquired by the acquisition unit 1901 to the third image data using the control information 1712, on the basis of the first image data. Specifically, for example, if the third encoded image data is a P-picture, the decoding unit 1902 decodes the third encoded image data to the third image data using the first image data according to the reference pattern applied to pixel position compensation prediction, and if the third encoded image data is a B-picture, the decoding unit 1902 decodes the third encoded image data to the third image data using the first image data and the second image data according to the reference pattern applied to pixel position compensation prediction.

Also, the decoding unit 1902 decodes the fourth encoded image data acquired by the acquisition unit 1901 to the fourth image data using the control information 1712, on the basis of the first image data. Specifically, for example, if the fourth encoded image data is a P-picture, the decoding unit 1902 decodes the fourth encoded image data to the fourth image data using any of the first image data to the third image data according to the reference pattern applied to pixel position compensation prediction, and if the third encoded image data is a B-picture, the decoding unit 1902 decodes the fourth encoded image data to the fourth image data using two pieces of image data among the first image data to the third image data according to the reference pattern applied to pixel position compensation prediction.

The second generation unit 1903 identifies the pattern of the color array from the image format information 1711, and generates the RAW image data 100 in which the first color component to the fourth color component are repeatedly arranged, from the pixel groups of the first image data to the fourth image data decoded by the decoding unit 1902 such that the color array pattern is the identified color array 101.

<Configuration Example of Decoding Unit 1902>

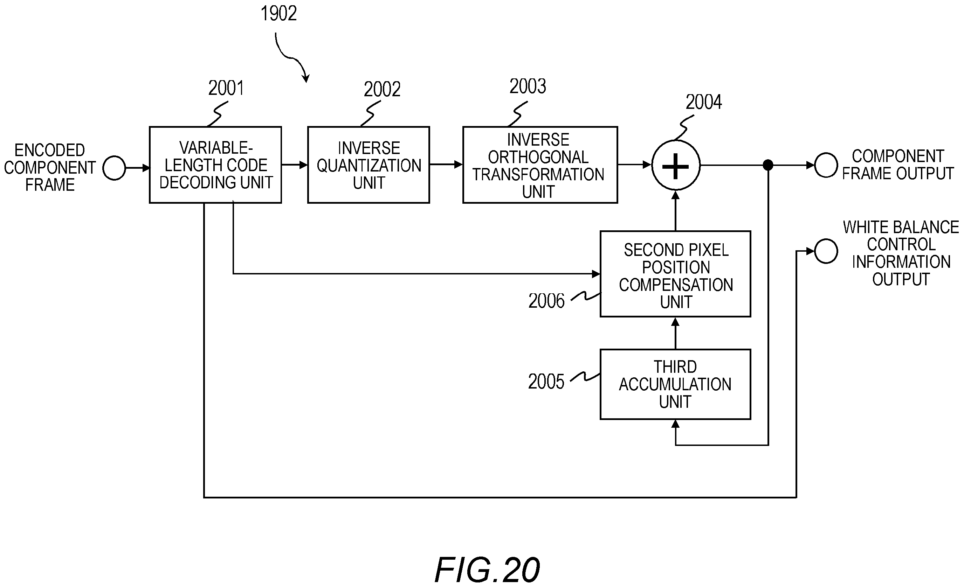

FIG. 20 is a block diagram showing a configuration example of the decoding unit 1902. The decoding unit 1902 has a variable-length code decoding unit 2001, an inverse quantization unit 2002, an inverse orthogonal transformation unit 2003, an addition unit 2004, a third accumulation unit 2005, and a second pixel position compensation unit 2006.

The variable-length code decoding unit 2001 decodes the inputted encoded component frame and outputs a quantization coefficient and a motion vector. The decoded quantization coefficient is inputted to the inverse quantization unit 2002 and the decoded motion vector is inputted to the second pixel position compensation unit 2006.

The inverse quantization unit 2002 performs inverse quantization on a quantized coefficient at the block level to decode the frequency coefficient. The inverse orthogonal transformation unit 2003 performs inverse orthogonal transformation on the frequency coefficient decoded by the inverse quantization unit 2002 to decode the prediction error value (or signal of original image).

The addition unit 2004 adds the decoded prediction error value to a prediction value generated by the second pixel position compensation unit 2006, thereby outputting the decoded image data at the block level. The image data outputted from the addition unit 2004 is outputted as the component frame and inputted to the third accumulation unit 2005.

The third accumulation unit 2005 accumulates the decoded value of the image as the reference component frame. Image data not referred to in pixel position compensation prediction thereafter is sequentially deleted from the third accumulation unit 2005. The second pixel position compensation unit 2006 outputs, to the addition unit 2004, the prediction values predicted at the block level for the image to be decoded on the basis of the motion vector and the reference component frame.

<Example of Decoding Process Steps>

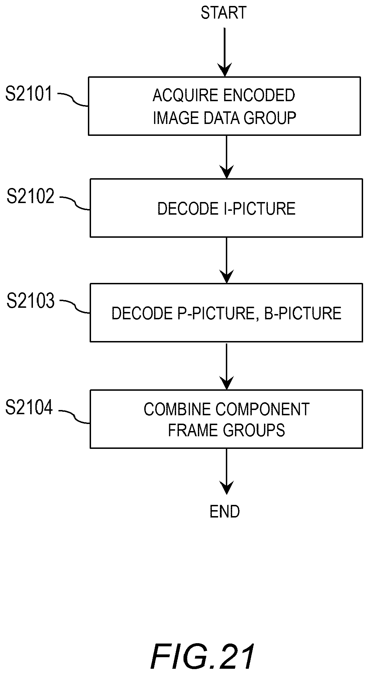

FIG. 21 is a flowchart showing an example of decoding process steps by the decoder 1900. The decoder 1900 uses the acquisition unit 1901 to acquire the encoded image data group as the encoded component frame group (step S2101), and uses the decoding unit 1902 to decode the first encoded image data (I-picture) to the component frame (step S2102).

Next, the decoder 1900 uses the decoding unit 1902 to decode the subsequent encoded image data (P-picture or B-picture) to component frames (step S2103). Then, the decoder 1900 uses the second generation unit 1903 to combine the decoded generated frame groups to restore the RAW image data 100 (step S2104).

Thus, according to Embodiment 1, by performing inter-component-frame prediction of the RAW image data 100 by relying on the property that the hue and the chroma result in a higher degree of correlation among component frames, it is possible to improve encoding efficiency for the RAW image data 100 in which there is a high degree of correlation among the component frames. Also, it is possible to restore the original RAW image data 100 even if encoding is performed by inter-component-frame prediction encoding.

[Embodiment 2]

In Embodiment 2, encoding in which white balance adjustment is performed on the RAW image data 100 and then encoding is performed, and decoding in which the component frames are decoded to generate the white balance-adjusted RAW image data and then inverse white balance adjustment is performed to generate the RAW image data is performed. In Embodiment 2, differences from Embodiment 1 will be primarily described, and the same components as those of Embodiment 1 are assigned the same reference characters and descriptions thereof are omitted.

<Encoding and Decoding Example>

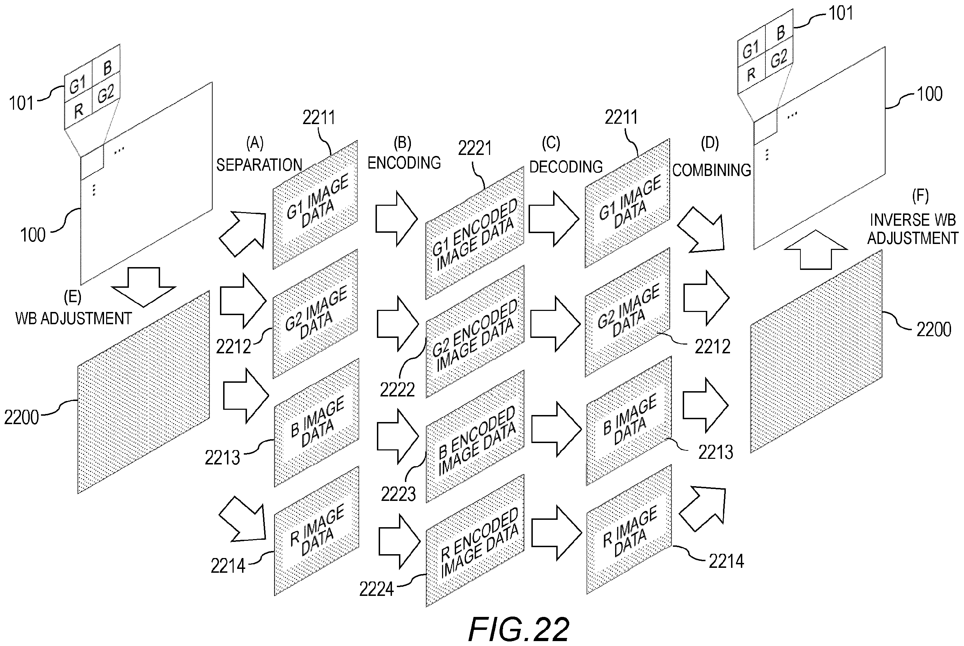

FIG. 22 is a descriptive drawing showing an encoding and decoding example of Embodiment 2. (E) WB (white balance) adjustment, (A) separation, and (B) encoding are executed by the encoder 400, and (C) decoding, (D) combining, and (F) inverse WB adjustment are executed by the decoder 1900.

(E) The encoder 400 performs white balance adjustment on the RAW image data 100. White balance adjustment is executed according to white balance (in the encoder 400) setting items (auto, manual, tungsten, cloudy, fluorescent, shady, daylight, etc.) that are set when generating the RAW image data by performing imaging. The RAW image data 100 that has undergone white balance adjustment is WB-adjusted RAW image data 2200.

(A) The encoder 400 generates a component frame for each color component from the WB-adjusted RAW image data 2200. Specifically, for example, the encoder 400 generates G1 image data 2211 that is a color component frame for green (G1), G2 image data 2212 that is a color component frame for green (G2), B image data 2213 that is a color component frame for blue (B), and R image data 2214 that is a color component frame for red (R).

The G1 image data 2211 is image data constituted of a G1 pixel group from the color arrays 101 in the WB-adjusted RAW image data 2200. The G2 image data 2212 is image data constituted of a G2 pixel group from the color arrays 101 in the WB-adjusted RAW image data 2200.

The B image data 2213 is image data constituted of a B pixel group from the color arrays 101 in the WB-adjusted RAW image data 2200. The R image data 2214 is image data constituted of an R pixel group from the color arrays 101 in the WB-adjusted RAW image data 2200.

(B) The encoder 400 encodes the component frames between the component frames. Specifically, for example, the encoder 400 encodes one component frame group by in-frame prediction encoding to generate an I-picture, and encodes the remaining component frame groups by employing in-frame prediction encoding using the I-picture to a P-picture or a B-picture. Here, the G1 image data 2211 is encoded to G1 encoded image data 2221, the G2 image data 2212 is encoded to G2 encoded image data 2222, the B image data 2213 is encoded to B encoded image data 2223, and the R image data 2214 is encoded to R encoded image data 2224.

(C) The decoder 1900 decodes the encoded component frame group. Specifically, for example, the decoder 1900 decodes the I-picture, and then, uses the component frame decoded from the I-picture to decode the P-picture or B-picture, to generate another component frame. In other words, the decoder 1900 decodes the G1 encoded image data 2221, the G2 encoded image data 2222, the B encoded image data 2223, and the R encoded image data 2224 to generate the G1 image data 2211, the G2 image data 2212, the B image data 2213, and the R image data 2214.

(D) The decoder 1900 combines the component frames in the decoded component frame group to generate the WB-adjusted RAW image data 2200. Specifically, for example, pixels G1, G2, B, and R in the same position in the G1 image data 2211, the G2 image data 2212, the B image data 2213, and the R image data 2214 are arranged according to the color array 101 to decode the WB-adjusted RAW image data 2200 from the G1 image data 2211, the G2 image data 2212, the B image data 2213, and the R image data 2214.

(F) The decoder 1900 performs inverse WB adjustment to convert the WB-adjusted RAW image data 2200 to the original RAW image data 100.

Thus, by performing inter-component-frame prediction of the WB-adjusted RAW image data 2200 by relying on the property that the hue and the chroma result in a higher degree of correlation among component frames, it is possible to improve encoding efficiency for the WB-adjusted RAW image data 2200. Also, it is possible to restore the original WB-adjusted RAW image data 2200 even if encoding is performed by inter-component-frame prediction encoding.

Also, blue (B) and red (R) have a low pixel value that is a signal level compared to green (G), and thus, have low correlation. Thus, by performing white balance adjustment on the RAW image data 100 prior to being encoded, the signal levels for the blue (B) and the red (R) are brought closer to the signal level of the green (G). As a result, it is possible to improve the encoding efficiency for the WB-adjusted RAW image data 2200.

Also, the white balance adjustment is executed for the RAW image data 100 prior to encoding, and thus, white balance adjustment for RAW image data 100 to be decoded is unnecessary. However, inverse white balance adjustment may be performed in order to restore the WB-adjusted RAW image data 2200 when decoding.

<Mechanical Configuration Example of Encoder 400>

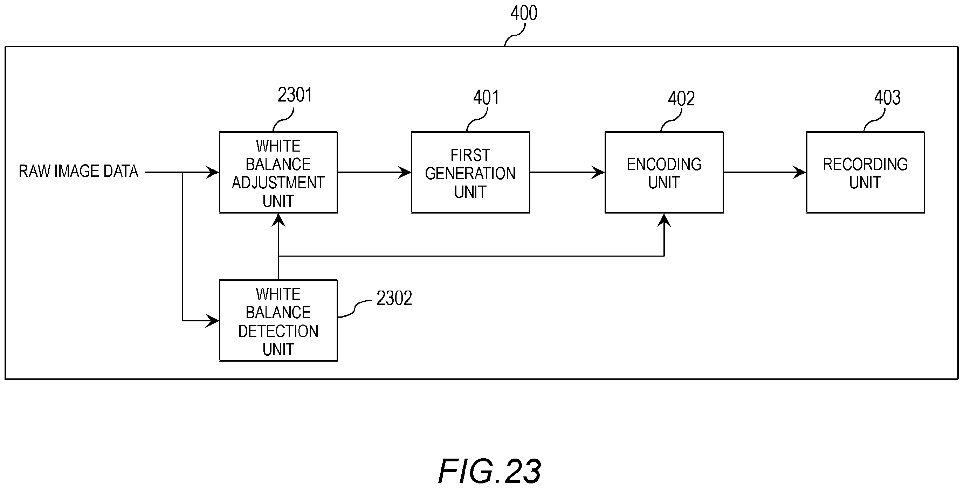

FIG. 23 is a block diagram showing a mechanical configuration example of the encoder 400 according to Embodiment 2. The encoder 400, in addition to the components shown in Embodiment 1, has a white balance adjustment unit 2301 and a white balance detection unit 2302. The white balance adjustment unit 2301 and the white balance detection unit 2302 are specifically functions realized by the LSI 304, or by the processor 301 executing programs stored in the storage device 302, for example.

The white balance adjustment unit 2301 performs white balance adjustment on the RAW image data 100 according to white balance setting items (auto, manual, tungsten, cloudy, fluorescent, shady, daylight, etc.), and outputs the WB-adjusted RAW image data 2200 to the first generation unit 401. Thus, the first generation unit 401 performs separation of component frames such as shown in (A) of FIG. 22 for the WB-adjusted RAW image data 2200. White balance adjustment is performed by multiplying the pixel values of the RAW image data 100 by a white balance adjustment gain coefficient, with the black level of the RAW image data 100 as the standard, for example. For example, where the black level of the RAW image data 100 is OB, the pixel value of the B component is XB, and the white balance adjustment gain coefficient of the B component is AB, the pixel value YB of the B component after white balance adjustment is calculated as follows: When

$$OB \leq XB, \quad YB = (XB - OB) \times AB + OB$$

When

$$XB < OB, \quad YB = (OB - XB) \times AB + OB$$

The white balance detection unit 2302 detects the white balance type suited to the RAW image data 100 according to the RAW image data 100 and notifies the white balance adjustment unit 2301. As a result, the white balance adjustment unit 2301 performs white balance adjustment on the RAW image data 100 according to the white balance (auto, manual, tungsten, cloudy, fluorescent, shady, daylight, etc.) type received in the notification.

Also, the white balance detection unit 2302 notifies the encoding unit 402 of information (white balance control information) identifying the detected type of white balance. Specifically, for example, the white balance control information is outputted to the variable-length coding unit 605 as shown in FIG. 6. As a result, the encoding unit 402 can assign white balance control information to the control information 1712 in the header information 1701 of the encoded component frame 1700, which was encoded by the encoding unit 402.

Here, the white balance control information is constituted of information indicating that the RAW image data 2200 has undergone white balance adjustment (hereinafter referred to as "adjustment information"), the white balance gain of the B component of the RAW image data 2200, and the white balance adjustment gain coefficient of the R component of the RAW image data 2200, for example.

The decoder 1900 to be described later can recognize that the RAW image data 2200 has undergone white balance adjustment according to the adjustment information assigned to the control information 1712. Also, the decoder 1900 uses the white balance adjustment gain coefficients of the B component and the R component assigned to the control information 1712 to enable inverse white balance adjustment during decoding.

The control information 1712 has assigned thereto at least one of the above-mentioned adjustment information, the white balance adjustment gain coefficient of the B component, and the white balance adjustment gain coefficient of the R component.

Embodiment 2 shows an example in which white balance adjustment is performed on the RAW image data 100. However, instead of white balance adjustment, a process of reducing at least one of the following differences may be performed: the difference between the value of the R color component data and the value of the G color component data; the difference between the value of the G color component data and the value of the B color component data; and the difference between the value of the B color component data and the value of the R color component data.

<Example of Encoding Process Steps>

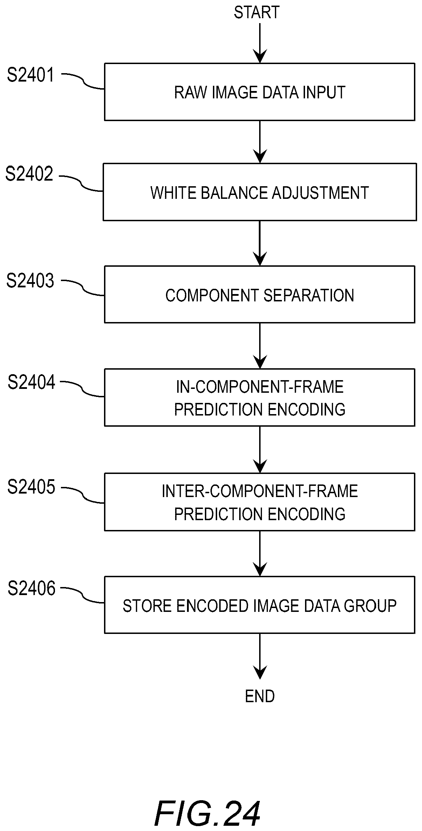

FIG. 24 is a flowchart showing an example of encoding process steps by the encoder 400 according to Embodiment 2. The encoder 400 receives input of the RAW image data 100 (step S2401), performs white balance adjustment on the RAW image data 100 using the white balance adjustment unit 2301, and outputs the WB-adjusted RAW image data 2200 (step S2402). The encoder 400 uses the first generation unit 401 to separate the pixel groups of the WB-adjusted RAW image data 2200 for each color component and generate a component frame for each color component (step S2403).

Next, the encoder 400 uses the encoding unit 402 to generate an I-picture by executing in-component-frame prediction encoding (step S2404). Then, the encoder 400 uses the encoding unit 402 to execute inter-component-frame prediction encoding for the remaining component frames to generate a P-picture or a B-picture (step S2405). Lastly, the encoder 400 uses the recording unit 403 to store the encoded image data group that was encoded in steps S2404 and S2405 in the storage device 302 (step S2406).

<Mechanical Configuration Example of Decoder 1900>

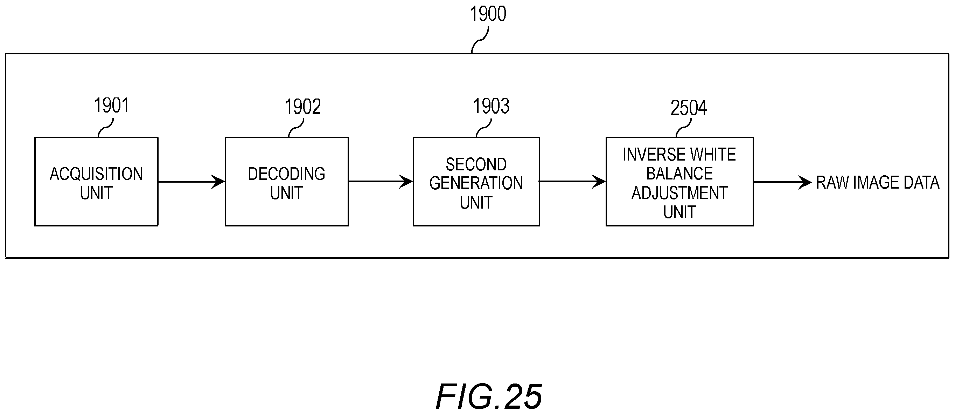

FIG. 25 is a block diagram showing a mechanical configuration example of the decoder 1900 according to Embodiment 2. The decoder 1900, in addition to the components shown in Embodiment 1, has an inverse white balance adjustment unit 2504. The inverse white balance adjustment 2504 is a specifically function realized by the LSI 304, or by the processor 301 executing programs stored in the storage device 302, for example. In Embodiment 2, the second generation unit 1903 generates the adjusted RAW image data 2200.

The inverse white balance adjustment unit 2504 refers to the white balance control information in the header information 1701 assigned to the WB-adjusted RAW image data 2200 attained from the second generation unit 1903 to perform inverse white balance adjustment on the WB-adjusted RAW image data 2200 and restore the original RAW image data 100.

<Example of Decoding Process Steps>

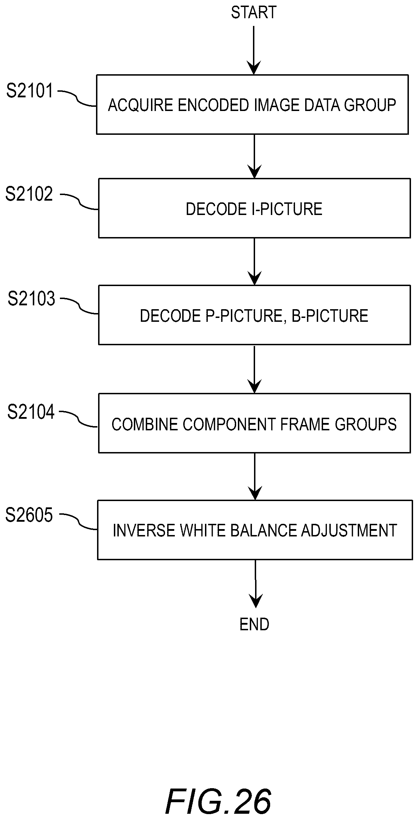

FIG. 26 is a flowchart showing an example of decoding process steps by the decoder 1900 according to Embodiment 2. After steps S2101 to S2104, the decoder 1900 uses the inverse white balance adjustment unit 2504 to perform inverse white balance adjustment on the WB-adjusted RAW image data 2200, to restore the original RAW image data 100 (step S2605).

Thus, according to Embodiment 2, in a manner similar to Embodiment 1, by performing inter-component-frame prediction of the WB-adjusted RAW image data 2200 by relying on the property that the hue and the chroma result in a higher degree of correlation among component frames, it is possible to improve encoding efficiency for the WB-adjusted RAW image data 2200. Also, it is possible to restore the original RAW image data 100 even if encoding is performed by inter-component-frame prediction encoding.

Also, blue (B) and red (R) have a low pixel luminance value that is a signal level compared to green (G), and thus, have low correlation. Thus, by performing white balance adjustment on the RAW image data 100 prior to being encoded, the signal levels for the blue (B) and the red (R) are brought closer to the signal level of the green (G). As a result, it is possible to improve the encoding efficiency for the WB-adjusted RAW image data 2200. Also, the white balance adjustment is executed for the RAW image data 100 prior to encoding, and thus, by omitting the inverse white balance adjustment unit 2504, white balance adjustment of RAW image data 100 to be decoded can be made unnecessary.

[Embodiment 3]

Embodiment 3 is an example in which encoding and decoding is performed on RAW video data in which the RAW image data 100 is arrayed along a time axis. In Embodiment 3, differences from Embodiment 1 will be primarily described, and the same components as those of Embodiment 1 are assigned the same reference characters and descriptions thereof are omitted.

<Encoding and Decoding Example>

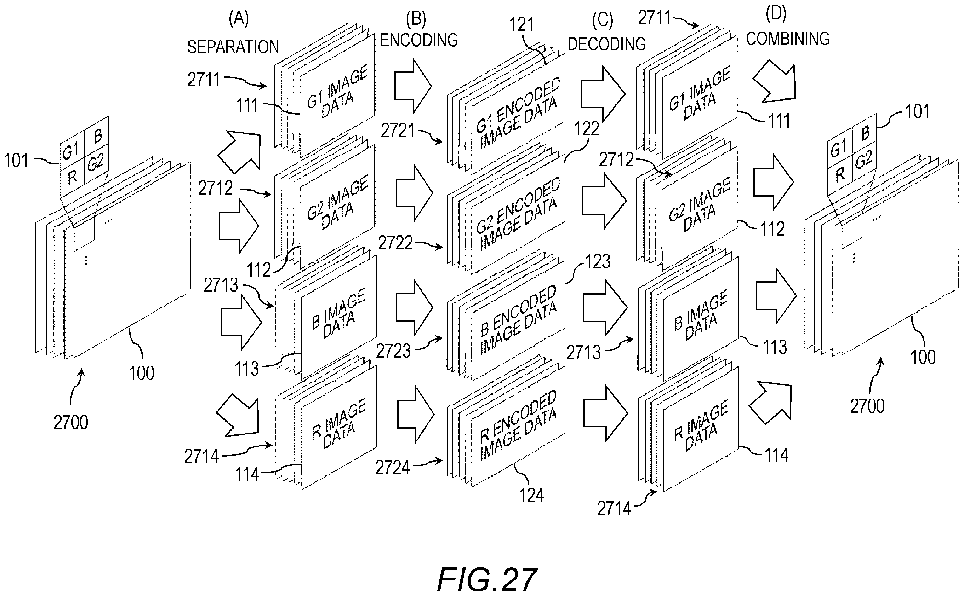

FIG. 27 is a descriptive drawing showing an encoding and decoding example of Embodiment 3. (A) Separation and (B) encoding are executed by the encoder 400, and (C) decoding and (D) combining are executed by the decoder 1900.

(A) The encoder 400 acquires RAW video data 2700 in which the RAW image data 100 is arrayed along a time axis, and generates a component frame for each color component for each piece of RAW image data 100. As a result, a G1 image data array 2711, a G2 image data array 2712, a B image data array 2713, and an R image data array 2714 are attained.
(B) The encoder 400 encodes the color component frames between the component frames. Specifically, for example, the encoder 400 encodes one component frame group by in-frame prediction encoding to generate an I-picture, and encodes the remaining component frame groups by employing in-frame prediction encoding using the I-picture to a P-picture or a B-picture. Here, the G1 image data array 2711 is encoded to a G1 encoded image data array 2721, the G2 image data array 2712 is encoded to a G2 encoded image data array 2722, the B image data array 2713 is encoded to a B encoded image data array 2723, and the R image data array 2714 is encoded to an R encoded image data array 2724.
(C) The decoder 1900 decodes the encoded component frame group. Specifically, for example, the decoder 1900 decodes the I-picture, and then, uses the component frame decoded from the I-picture to decode the P-picture or B-picture, to generate another component frame. In other words, the decoder 1900 decodes the G1 encoded image data array 2721, the G2 encoded image data array 2722, the B encoded image data array 2723, and the R encoded image data array 2724, to generate the G1 image data array 2711, the G2 image data array 2712, the B image data array 2713, and the R image data array 2714.
(D) The decoder 1900 combines the component frames in the decoded component frame group to generate the RAW image data 100. Specifically, for example, pixels G1, G2, B, and R in the same position in the G1 image data 111, the G2 image data 112, the B image data 113, and the R image data 114 are arranged according to the color array 101 to decode the RAW image data 100 sequentially, thereby decoding the RAW video data 2700.

Thus, by performing inter-component-frame prediction of the RAW image data 100 by relying on the property that the hue and the chroma result in a higher degree of correlation among component frames, it is possible to improve encoding efficiency for the RAW image data 100 in which there is a high degree of correlation among the component frames, and therefore, to improve the encoding efficiency for the RAW video data 2700. Also, it is possible to restore the original RAW image data 100, and therefore, the RAW video data 2700, even if encoding is performed by inter-component-frame prediction encoding.

<Reference Direction Example for Component Frames>

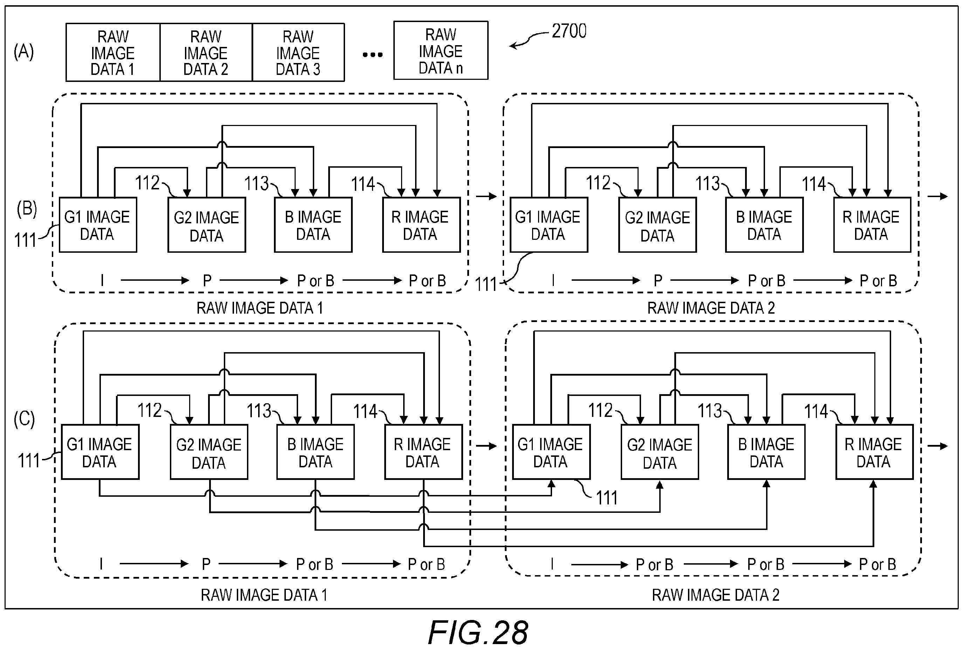

FIG. 28 is a descriptive drawing showing a reference direction example for component frames. (A) shows one example of the RAW video data 2700. (B) and (C) show an example of the reference direction for component frames in the RAW video data 2700. In (B) and (C), for ease of description, among the chronological RAW image data 1 to n (n being an integer of 2 or greater), an example of a reference direction for the component frames in RAW image data 1 and RAW image data 2 will be described.

(B) shows a reference direction for a case in which the component frames from the same RAW image data 1 and 2 are inputted in the order of the G1 image data 111, the G2 image data 112, the B image data 113, and the R image data 114. In the RAW image data 1 and the RAW image data 2, the G1 image data 111, which is the first component frame, is encoded to an I-picture. The subsequently inputted G2 image data 112 is encoded into a P-picture by inter-frame prediction encoding with the preceding G1 image data 111 as the reference frame.

The subsequently inputted B image data 113 is encoded into a P-picture or a B-picture by inter-frame prediction encoding with at least one of the preceding G1 image data 111 and G2 image data 112 as the reference frame. The R image data 114 inputted last is encoded into a P-picture or a B-picture by inter-frame prediction encoding with at least one of the preceding G1 image data 111, G2 image data 112, and B image data 113 as the reference frame.

In (C), the reference direction in the first RAW image data 1 is the same as the RAW image data 1 of (B). Regarding the RAW image data 2, the first G1 image data 111 is encoded into a P-picture or a B-picture by inter-frame prediction encoding with the G1 image data 111 of the preceding RAW image data 1 as the reference frame.

The subsequently inputted G2 image data 112 is encoded into a P-picture or a B-picture by inter-frame prediction encoding with the component frame of at least one of the G1 image data 111 of the preceding RAW image data 1 and the G1 image data 111 of the RAW image data 2 as the reference frame.

The subsequently inputted B image data 113 is encoded into a P-picture or a B-picture by inter-frame prediction encoding with the component frame of at least one of the B image data 113 of the preceding RAW image data 1, the G1 image data 111 of the RAW image data 2, and the G2 image data 112 of the RAW image data 2 serving as the reference frame.

The R image data 114 inputted last is encoded into a P-picture or a B-picture by inter-frame prediction encoding with the component frame of at least one of the R image data 114 of the preceding RAW image data 1, the G1 image data 111 of the RAW image data 2, the G2 image data 112 of the RAW image data 2, and the B image data 113 of the RAW image data 2 as the reference frame.

The reference directions shown in FIG. 28 are merely examples, and encoding is possible in an input order for component frames other than (B) and (C). Also, this encoding unit 402 uses the luminance value from pixels in the image capture element 353 that do not depend on the color components, and thus, can perform encoding even when differing color components are used as the reference component frame.

<Slice-Level Encoding Example>

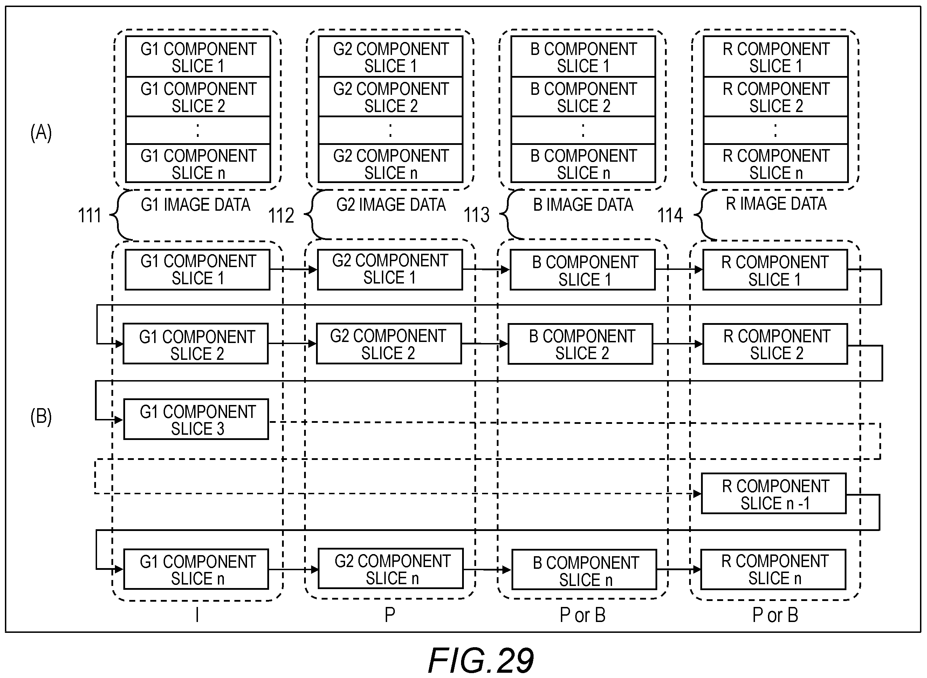

FIG. 29 is a descriptive drawing showing an example of encoding at the slice level. (A) shows the slice level of each component frame generated from the chronological RAW image data 1 to 4. A slice is data formed by splitting the component frame, and is one unit for encoding. Here, each component frame (G1 image data 111, G2 image data 112, B image data 113, R image data 114) has n slices of the same size (n being an integer of 2 or greater). (B) in FIG. 28 is shown as an example of the order in which the component frames are inputted, but another input order may be used.

(B) shows an encoding process example at the slice level. The arrows show the encoding order. That is, a G1 component slice 1, a G2 component slice 1, a B component slice 1, and an R component slice 1, which have "1" as the slice number, are encoded in the stated order, and then, a G1 component slice 2, a G2 component slice 2, a B component slice 2, and an R component slice 2, which have "2" as the slice number, are encoded in the stated order. In this manner, the component slices are encoded in descending order according to slice number, and lastly, a G1 component slice n, a G2 component slice n, a B component slice n, and an R component slice n, which have "n" as the slice number, are encoded in the stated order.

In this manner, encoding is performed among component frames at the slice level, allowing for improvement in encoding latency. The reference direction among component slices of the same slice number may be such that the G1 component slice is encoded to an I-picture as shown in (B) of FIG. 28 or the G1 component slice is encoded to a P-picture as shown in (C). In FIG. 29, an example of encoding at the slice level was described, but in the case of decoding as well, decoding may be performed at the slice level, similar to encoding at the slice level. As a result, it is possible to improve the decoding latency.

Thus, in Embodiment 3, by performing inter-component-frame prediction of the RAW image data 100 by relying on the property that the hue and the chroma result in a higher degree of correlation among component frames, it is possible to improve encoding efficiency for the RAW image data 100 in which there is a high degree of correlation among the component frames, and therefore, to improve the encoding efficiency for the RAW video data 2700. Also, it is possible to restore the original RAW image data 100, and therefore, the RAW video data 2700, even if encoding is performed by inter-component-frame prediction encoding.

Also, encoding of component frames is performed at the slice level, allowing for improvement in inter-component-frame encoding latency. Similarly, by decoding component frames at the slice level, it is possible to improve in component frame decoding latency.

[Embodiment 4]

Embodiment 4 is an example in which encoding and decoding is performed after performing white balance adjustment on the RAW video data 2700 in which the RAW image data 100 is arrayed along a time axis, and then inverse white balance adjustment is performed. In Embodiment 4, differences from Embodiments 1 and 3 will be primarily described, and the same components as those of Embodiments 1 and 3 are assigned the same reference characters and descriptions thereof are omitted.

<Encoding and Decoding Example>

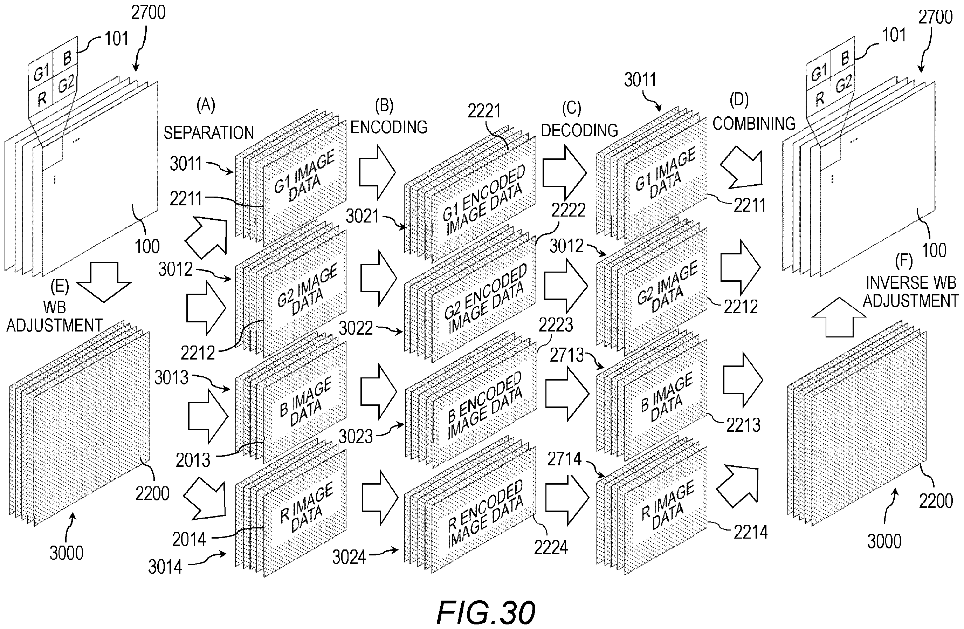

FIG. 30 is a descriptive drawing showing an encoding and decoding example of Embodiment 4. (E) WB adjustment, (A) separation, and (B) encoding are executed by the encoder 400, and (C) decoding, (D) combining, and (F) inverse WB adjustment are executed by the decoder 1900.

(E) The encoder 400 performs white balance adjustment on the respective RAW image data 100 of the RAW video data 2700. White balance adjustment is executed according to white balance settings in the encoder 400 (auto, manual, tungsten, cloudy, fluorescent, shady, daylight, etc.). The RAW image data 100 that has undergone white balance adjustment is designated as WB-adjusted RAW image data 2200, and the chronologically arranged WB-adjusted RAW image data 2200 is designated as WB-adjusted RAW video data 3000.

(A) The encoder 400 acquires WB-adjusted RAW video data 3000 in which the WB-adjusted RAW image data 2200 is arrayed along a time axis, and generates a component frame for each color component for each piece of WB-adjusted RAW image data 2200. As a result, a WB-adjusted G1 image data array 3011, a WB-adjusted G2 image data array 3012, a WB-adjusted B image data array 3013, and a WB-adjusted R image data array 3014 are attained.

(B) The encoder 400 encodes the color component frames between the component frames. Specifically, for example, the encoder 400 encodes one component frame group by in-frame prediction encoding to generate an I-picture, and encodes the remaining component frame groups by employing in-frame prediction encoding using the I-picture to a P-picture or a B-picture.

Here, the WB-adjusted G1 image data array 3011 is encoded to a WB-adjusted G1 encoded image data array 3021, the WB-adjusted G2 image data array 3012 is encoded to a WB-adjusted G2 encoded image data array 3022, the WB-adjusted B image data array 3013 is encoded to a WB-adjusted B encoded image data array 3023, and the WB-adjusted R image data array 3014 is encoded to a WB-adjusted R encoded image data array 3024.

(C) The decoder 1900 decodes the encoded component frame group. Specifically, for example, the decoder 1900 decodes the I-picture, and then, uses the component frame decoded from the I-picture to decode the P-picture or B-picture, to generate another component frame. In other words, the decoder 1900 decodes the WB-adjusted G1 encoded image data array 3021, the WB-adjusted G2 encoded image data array 3022, the WB-adjusted B encoded image data array 3023, and the WB-adjusted R encoded image data array 3024, to generate the WB-adjusted G1 image data 3011, the WB-adjusted G2 image data array 3012, the WB-adjusted B image data array 3013, and the WB-adjusted R image data array 3014.

(D) The decoder 1900 combines the component frames in the decoded component frame group to generate the WB-adjusted RAW image data 2200. Specifically, for example, pixels G1, G2, B, and R in the same position in the WB-adjusted G1 image data 2211, the WB-adjusted G2 image data 2212, the WB-adjusted B image data 2213, and the WB-adjusted R image data 2214 are arranged according to the color array 101 to decode the WB-adjusted RAW image data sequentially, thereby decoding the WB-adjusted RAW video data 2700.

(F) The decoder 1900 performs inverse WB adjustment to convert each piece of the WB-adjusted RAW image data 2200 to the original RAW image data 100, to restore the RAW video data 2700.

Thus, by performing inter-component-frame prediction of the RAW image data 100 by relying on the property that the hue and the chroma result in a higher degree of correlation among component frames, it is possible to improve encoding efficiency for the WB-adjusted RAW image data 2200 in which there is a high degree of correlation among the component frames, and therefore, to improve the encoding efficiency for the WB-adjusted RAW video data 3000. Also, it is possible to restore the original WB-adjusted RAW image data 2200, and therefore, the WB-adjusted RAW video data 3000, even if encoding is performed by inter-component-frame prediction encoding.

Also, similar to Embodiment 3, encoding of component frames is performed at the slice level for the WB-adjusted RAW video data 3000, allowing for improvement in inter-component-frame encoding latency. Similarly, for the WB-adjusted G1 encoded image data array 3021, the WB-adjusted G2 encoded image data array 3022, the WB-adjusted B encoded image data array 3023, and the WB-adjusted R encoded image data array 3024, by decoding the component frames at the slice level, it is possible to improve the component frame decoding latency.

Thus, as described above, according to the present embodiment, by performing inter-component-frame prediction of the RAW image data 100 by relying on the property that the hue and the chroma result in a higher degree of correlation among component frames, it is possible to improve encoding efficiency for the RAW image data 100 in which there is a high degree of correlation among the component frames. Also, it is possible to restore the original RAW image data 100 even if encoding is performed by inter-component-frame prediction encoding.

DESCRIPTION OF THE REFERENCE NUMERALS

100 RAW image data, 101 a color array, 111 G1 image data, 112 G2 image data, 113 B image data, 114 R image data, 121 G1 encoded image data, 122 G2 encoded image data, 123 B encoded image data, 124 R encoded image data, 300 an information processing apparatus, 301 a processor, 302 a storage device, 353 an image capture element, 400 an encoder, 401 a first generation unit, 402 an encoding unit, 403 a recording unit, 610 a position offset detection unit, 611 a first pixel position compensation unit, 1700 an encoded component frame, 1701 header information, 1711 image format information, 1712 control information, 1900 a decoder 1900, 1901 an acquisition unit, 1902 a decoding unit, 1903 a second generation unit, 2006 a second pixel position compensation unit, 2200 WB-adjusted RAW image data, 2301 a white balance adjustment unit, 2504 an inverse white balance adjustment unit, 2700 RAW video data, 3000 WB-adjusted RAW video data

**Claims**

1. An encoder, comprising:

   a generation unit configured to generate first image data constituted of a pixel group of a first color component and second image data constituted of a pixel group of a second color component differing from the first color component, from RAW image data in which the first color component and the second color component are arranged in a repeating fashion; and an encoding unit configured to encode the second image data generated by the generation unit on the basis of the first image data generated by wherein the generation unit.

2. The encoder according to claim 1, wherein the encoding unit is configured to compensate the pixel positions between the first image data and the second image data to encode the second image data.

3. The encoder according to claim 2, wherein the encoding unit is configured to compensate a focus pixel in the second image data with a specific reference pixel in the first image data at a position differing from the focus pixel, to encode the second image data.

4. The encoder according to claim 3, wherein the encoding unit is configured to encode the focus pixel on the basis of a reference pattern, among a plurality of reference patterns constituted of the specific reference pixel, having a smallest difference from the focus pixel.

5. The encoder according to claim 1, wherein the RAW image data has a third color component that is the same as either the first color component or the second color component, or differs from both the first color component and the second color component, wherein the generation unit is configured to generate the first image data, the second image data, and third image data constituted of a pixel group of the third color component, from the RAW image data in which the third color component is arranged, and wherein the encoding unit is configured to encode the third image data generated by the generation unit on the basis of the first image data.

6. The encoder according to claim 5, wherein the encoding unit is configured to encode the third image data on the basis of the first image data and the second image data.

7. The encoder according to claim 1, further comprising:

   an adjustment unit configured to adjust a white balance of the RAW image data, wherein the generation unit is configured to generate first image data constituted of a pixel group of a first color component and second image data constituted of a pixel group of the second color component from RAW image data in which the white balance was adjusted by the adjustment unit.

8. The encoder according to claim 1, wherein the generation unit is configured to acquire a plurality of pieces of the RAW image data and generate the first image data and the second image data for each of the pieces of the RAW image data, and

wherein the encoding unit is configured to encode the second image data on the basis of the first image data.

9. The encoder according to claim 8, wherein the encoding unit is configured to encode the second image data separated from the same RAW image data as the first image data, on the basis of the first image data.

10. The encoder according to claim 8, wherein the encoding unit is configured to encode the second image data separated from another piece of the RAW image data differing from the first image data, on the basis of the first image data.

11. The encoder according to claim 10, wherein, on the basis of a predetermined region of the first image data, the encoding unit is configured to encode a region corresponding to the predetermined region in the second image data generated from the RAW image data differing from the first image data.

12. An encoder, comprising:

a generation unit configured to generate first image data constituted of a first color component and second image data constituted a second color component differing from the first color component from RAW image data based on output from an image capture element in which a photoelectric conversion unit is configured to perform photoelectric conversion of light of the first color component and a photoelectric conversion unit is configured to perform photoelectric conversion of light of the second color component are arranged in a repeating fashion; and an encoding unit configured to encode the second image data generated by the generation unit on the basis of the first image data generated by wherein the generation unit.

13. A decoder, comprising:

an acquisition unit configured to acquire first encoded image data in which first image data constituted of a pixel group of a first color component is encoded, and second encoded image data in which second image data constituted of a pixel group of a second color component differing from the first color component is encoded on the basis of the first image data; a decoding unit configured to decode the first encoded image data acquired by the acquisition unit to the first image data and decode the second encoded image data acquired by the acquisition unit to the second image data on the basis of the first image data; and a generation unit configured to generate RAW image data in which the first color component and the second color component are arranged in a repeating fashion, on the basis of the first image data and the second image data decoded by the decoding unit.

14. The decoder according to claim 13, wherein the decoding unit is configured to identify a reference pixel of the first image data on the basis of a reference pattern indicating a pixel position referred to when encoding a focus pixel of the second image data, and decode the focus pixel of the second image data from the second encoded image data on the basis of the reference pixel.

15. The decoder according to claim 13, wherein the acquisition unit is configured to acquire third encoded image data in which third image data constituted of a pixel group of a third color component is encoded on the basis of the first encoding data, wherein the third color component is a same color component as either the first color component or the second color component, or differs from both the first color component and the second color component, wherein the decoding unit is configured to decode the third encoded image data to the third image data on the basis of the first image data, and wherein the generation unit is configured to generate RAW image data in which the first color component, the second color component, and the third color component are arranged in a repeating fashion, on the basis of the first image data, the second image data, and the third image data decoded by the decoding unit.

16. The decoder according to claim 13, wherein the acquisition unit is configured to acquire information pertaining to white balance performed on the first image data and the second image data, wherein the decoder further comprises an inverse adjustment unit is configured to convert a color of the first image data and the second image data back to a color prior to adjustment of the white balance on the basis of the information pertaining to the white balance, and wherein the generation unit is configured to generate the RAW image data on the basis of the first image data that has been converted by the inverse adjustment unit and the second image data that has been converted by the inverse adjustment unit.

17. The decoder according to claim 13, wherein the acquisition unit is configured to acquire a plurality of encoded frames including the first encoded image data and the second encoded image data,

wherein the decoding unit, for each of the encoded frames, is configured to decode the first encoded image data to the first image data, decode the second encoded image data to the second image data on the basis of the first image data, and output a plurality of frames including the first image data and the second image data, and

wherein the generation unit is configured to generate, for each of the frames, RAW image data in which the first color component and the second color component are arranged in a repeating fashion, on the basis of the first image data and the second image data decoded by the decoding unit.

18. The decoder according to claim 17,
wherein the decoding unit is configured to decode the second encoded image data in a same encoded frame as the first encoded image data, on the basis of the first image data.

19. The decoder according to claim 17,
wherein the decoding unit is configured to decode the second encoded image data in an encoded frame differing from the first encoded image data, on the basis of the first image data.

20. The decoder according to claim 19,
wherein the decoding unit, on the basis of a predetermined region of the first image data, is configured to decode a region corresponding to the predetermined region in the second encoded image data in the encoded frame differing from the first image data.

21. An encoding method, comprising:

a generation process of generating first image data constituted of a pixel group of a first color component and second image data constituted of a pixel group of a second color component differing from the first color component, from RAW image data in which the first color component and the second color component are arranged in a repeating fashion; and
an encoding process of encoding the second image data generated by the generation unit on the basis of the first image data generated by wherein the generation unit.

22. A decoding method, comprising:

an acquisition process of acquiring first encoded image data in which first image data constituted of a pixel group of a first color component is encoded, and second encoded image data in which second image data constituted of a pixel group of a second color component differing from the first color component is encoded on the basis of the first image data;

a decoding process of decoding the first encoded image data acquired by the acquisition process to the first image data and decodes the second encoded image data acquired by the acquisition process to the second image data on the basis of the first image data; and
a generation process of generating RAW image data in which the first color component and the second color component are arranged in a repeating fashion, on the basis of the first image data and the second image data decoded by the decoding process.

23. An encoding program that causes a processor to execute the encoding method according to claim 21.

24. A decoding program that causes a processor to execute the decoding method according to claim 22.

(A) SEPARATION  (B) ENCODING  (C) DECODING  (D) COMBINING

100
101

G1 | B
R | G2

*FIG.1*

G1 IMAGE DATA — 111
G2 IMAGE DATA — 112
B IMAGE DATA — 113
R IMAGE DATA — 114

G1 ENCODED IMAGE DATA — 121
G2 ENCODED IMAGE DATA — 122
B ENCODED IMAGE DATA — 123
R ENCODED IMAGE DATA — 124

G1 IMAGE DATA — 111
G2 IMAGE DATA — 112
B IMAGE DATA — 113
R IMAGE DATA — 114

100
101

G1 | B
R | G2

**FIG.2**

EP 3 742 732 A1

300

INFORMATION PROCESSING APPARATUS

301

PROCESSOR

302

STORAGE DEVICE

303

OPERATION DEVICE

308

304

LSI

IMAGING UNIT

305

COMMUNICATION I/F

306

351

SIGNAL PROCESSING CIRCUIT

352    353    354

*FIG.3*

FIG.4

(a)

FIG.5

FIG.6

EP 3 742 732 A1

(A)

G1 IMAGE DATA    G2 IMAGE DATA    B IMAGE DATA    R IMAGE DATA

112    113    114    111

I → P → P or B → P or B

(B)

B IMAGE DATA    R IMAGE DATA    G1 IMAGE DATA    G2 IMAGE DATA

114    111    112    113

I → P → P or B → P or B

FIG.7

FIG.8

FIG.9

FIG.10

(A)

V(G1)=(0.5, 0) PREDICTION

ONE-REFERENCE PREDICTION
FROM G1 COMPONENT

(B)

V(G2)=(0, -0.5) PREDICTION

ONE-REFERENCE PREDICTION
FROM G2 COMPONENT

(C)

AVERAGE OF V(G1)=(0.5,0) PREDICTION AND V(G2)=(0,-0.5) PREDICTION

TWO-REFERENCE PREDICTION FROM
G1 COMPONENT AND G2 COMPONENT

FIG.11

(A)
V(G1)=(0, 0.5) PREDICTION

ONE-REFERENCE PREDICTION
FROM G1 COMPONENT

(B)
V(G2)=(-0.5, 0) PREDICTION

ONE-REFERENCE PREDICTION
FROM G2 COMPONENT

(C)
AVERAGE OF V(G1)=(0,0.5) PREDICTION AND V(G2)=(-0.5, 0) PREDICTION

TWO-REFERENCE PREDICTION FROM
G1 COMPONENT AND G2 COMPONENT

*FIG.12*

EP 3 742 732 A1

FIG.13

FIG.14

(A)

V(B)=(-0.5, 0) PREDICTION

ONE-REFERENCE PREDICTION
FROM B COMPONENT

(B)

V(R)=(0, -0.5) PREDICTION

ONE-REFERENCE PREDICTION
FROM R COMPONENT

(C)

AVERAGE OF V(B)=(-0.5,0) PREDICTION
AND V(R)=(0,-0.5) PREDICTION

TWO-REFERENCE PREDICTION FROM
B COMPONENT AND R COMPONENT

*FIG.15*

EP 3 742 732 A1

(A)
V(B)=(0, 0.5) PREDICTION

ONE-REFERENCE PREDICTION
FROM B COMPONENT

(B)
V(R)=(0.5, 0) PREDICTION

ONE-REFERENCE PREDICTION
FROM R COMPONENT

(C)
AVERAGE OF V(B)=(0,0.5) PREDICTION
AND V(R)=(0.5,0) PREDICTION

TWO-REFERENCE PREDICTION FROM
B COMPONENT AND R COMPONENT

*FIG.16*

FIG.17

START

↓

S1801 — RAW IMAGE DATA INPUT

↓

S1802 — COMPONENT SEPARATION

↓

S1803 — IN-COMPONENT-FRAME PREDICTION ENCODING

↓

S1804 — INTER-COMPONENT-FRAME PREDICTION ENCODING

↓

S1805 — STORE ENCODED IMAGE DATA GROUP

↓

END

*FIG.18*

FIG.19

FIG.20

EP 3 742 732 A1

START

S2101 — ACQUIRE ENCODED
IMAGE DATA GROUP

S2102 — DECODE I-PICTURE

S2103 — DECODE P-PICTURE, B-PICTURE

S2104 — COMBINE COMPONENT
FRAME GROUPS

END

*FIG.21*

FIG.22

400

2301

WHITE
BALANCE
ADJUSTMENT
UNIT

RAW IMAGE DATA

401

FIRST
GENERATION
UNIT

402

ENCODING
UNIT

403

RECORDING
UNIT

2302

WHITE
BALANCE
DETECTION
UNIT

FIG.23

START

S2401 — RAW IMAGE DATA INPUT

S2402 — WHITE BALANCE ADJUSTMENT

S2403 — COMPONENT SEPARATION

S2404 — IN-COMPONENT-FRAME
PREDICTION ENCODING

S2405 — INTER-COMPONENT-FRAME
PREDICTION ENCODING

S2406 — STORE ENCODED IMAGE DATA GROUP

END

*FIG.24*

1900

| 1901 | 1902 | 1903 | 2504 |
|------|------|------|------|
| ACQUISITION UNIT | DECODING UNIT | SECOND GENERATION UNIT | INVERSE WHITE BALANCE ADJUSTMENT UNIT | → RAW IMAGE DATA |

*FIG.25*

START

S2101 —— ACQUIRE ENCODED IMAGE DATA GROUP

S2102 —— DECODE I-PICTURE

S2103 —— DECODE P-PICTURE, B-PICTURE

S2104 —— COMBINE COMPONENT FRAME GROUPS

S2605 —— INVERSE WHITE BALANCE ADJUSTMENT

END

*FIG.26*

(A) SEPARATION

(B) ENCODING

(C) DECODING

(D) COMBINING

2711

111 G1 IMAGE DATA

2712 112 G2 IMAGE DATA

2713 113 B IMAGE DATA

2714 114 R IMAGE DATA

121 G1 ENCODED IMAGE DATA

2721 122 G2 ENCODED IMAGE DATA

2722 123 B ENCODED IMAGE DATA

2723 124 R ENCODED IMAGE DATA

2724

2711 G1 IMAGE DATA 111

2712 G2 IMAGE DATA 112

2713 B IMAGE DATA 113

2714 R IMAGE DATA 114

101 G1 B R G2

100

2700

101 G1 B R G2

100

2700

FIG.27

EP 3 742 732 A1

FIG.28

**(A)**

| G1 COMPONENT SLICE 1 | G2 COMPONENT SLICE 1 | B COMPONENT SLICE 1 | R COMPONENT SLICE 1 |
| G1 COMPONENT SLICE 2 | G2 COMPONENT SLICE 2 | B COMPONENT SLICE 2 | R COMPONENT SLICE 2 |
| : | : | : | : |
| G1 COMPONENT SLICE n | G2 COMPONENT SLICE n | B COMPONENT SLICE n | R COMPONENT SLICE n |

111 } G1 IMAGE DATA   112 } G2 IMAGE DATA   113 } B IMAGE DATA   114 } R IMAGE DATA

**(B)**

| G1 COMPONENT SLICE 1 | → | G2 COMPONENT SLICE 1 | → | B COMPONENT SLICE 1 | → | R COMPONENT SLICE 1 |
| G1 COMPONENT SLICE 2 | → | G2 COMPONENT SLICE 2 | → | B COMPONENT SLICE 2 | → | R COMPONENT SLICE 2 |
| G1 COMPONENT SLICE 3 | | | | | | |
| | | | | | | R COMPONENT SLICE n -1 |
| G1 COMPONENT SLICE n | → | G2 COMPONENT SLICE n | → | B COMPONENT SLICE n | → | R COMPONENT SLICE n |

I                 P                 P or B                 P or B

*FIG.29*

EP 3 742 732 A1

FIG.30

EP 3 742 732 A1

## INTERNATIONAL SEARCH REPORT

| International application No. |
| --- |
| PCT/JP2019/001083 |

**A. CLASSIFICATION OF SUBJECT MATTER**
Int.Cl. H04N19/50(2014.01)i, H04N9/07(2006.01)i, H04N19/503(2014.01)i, H04N19/593(2014.01)i

According to International Patent Classification (IPC) or to both national classification and IPC

**B. FIELDS SEARCHED**

Minimum documentation searched (classification system followed by classification symbols)
Int.Cl. H04N19/50, H04N9/07, H04N19/503, H04N19/593

Documentation searched other than minimum documentation to the extent that such documents are included in the fields searched

| | |
| --- | --- |
| Published examined utility model applications of Japan | 1922–1996 |
| Published unexamined utility model applications of Japan | 1971–2019 |
| Registered utility model specifications of Japan | 1996–2019 |
| Published registered utility model applications of Japan | 1994–2019 |

Electronic data base consulted during the international search (name of data base and, where practicable, search terms used)
IEEE, Bayer

**C. DOCUMENTS CONSIDERED TO BE RELEVANT**

| Category* | Citation of document, with indication, where appropriate, of the relevant passages | Relevant to claim No. |
| --- | --- | --- |
| X | CHUNG, K. H., CHAN, Y. H., A lossless compression scheme for Bayer CFA images, 2007 15th European Signal Processing Conference, 07 September 2007, pp. 649-652, Print ISBN: 978-839-2134-04-6 | 1-3, 5, 6, 12, 13, 15, 21-24 |
| Y | | 4, 7-11, 14, 16-20 |
| Y | CHUNG, K. H., CHAN, Y. H., A lossless compression scheme for Bayer color filter array images, IEEE Transactions on Image Processing (Feb. 2008), 14 January 2008, vol. 17, issue: 2, pp. 134-144 | 4, 14 |

☒ Further documents are listed in the continuation of Box C.   ☐ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 29.03.2019 | 09.04.2019 |

| Name and mailing address of the ISA/ | Authorized officer |
| --- | --- |
| Japan Patent Office 3-4-3, Kasumigaseki, Chiyoda-ku, Tokyo 100-8915, Japan | Telephone No. |

Form PCT/ISA/210 (second sheet) (January 2015)

**INTERNATIONAL SEARCH REPORT**

International application No.

PCT/JP2019/001083

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2014-143488 A (NIKON CORPORATION) 07 August 2014, paragraphs [0009]-[0018], [0150]-[0160], fig. 1, 21 (Family: none) | 7-11, 16-20 |
| Y | JP 2017-200199 A (NIKON CORPORATION) 02 November 2017, paragraphs [0089]-[0106], fig. 10 (Family: none) | 7-11, 16-20 |
| A | JP 2017-85556 A (CANON INC.) 18 May 2017, entire text, all drawings & US 2017/0124682 A1 | 1-24 |

Form PCT/ISA/210 (continuation of second sheet) (January 2015)

**REFERENCES CITED IN THE DESCRIPTION**

**Patent documents cited in the description**

- JP 2018005211 A

- JP 2002125241 A